(19) **Europäisches Patentamt European Patent Office Office européen des brevets**

(11) **EP 3 778 173 B1**

(12) **EUROPEAN PATENT SPECIFICATION**

(45) Date of publication and mention of the grant of the patent:
**27.09.2023 Bulletin 2023/39**

(21) Application number: **19774640.7**

(22) Date of filing: **25.03.2019**

(51) International Patent Classification (IPC):
**B29C 43/02** (2006.01)    **B29C 43/34** (2006.01)
**B29C 43/36** (2006.01)    **B29C 43/20** (2006.01)
**B29C 43/58** (2006.01)    **B30B 9/28** (2006.01)
**B29K 105/08** (2006.01)    **B29K 105/12** (2006.01)

(52) Cooperative Patent Classification (CPC):
**B29C 43/36; B29C 43/021; B29C 43/58;**
**B30B 9/28;** B29C 43/203; B29C 2043/5808;
B29C 2043/5833; B29K 2105/12

(86) International application number:
**PCT/JP2019/012313**

(87) International publication number:
**WO 2019/188873 (03.10.2019 Gazette 2019/40)**

(54) **PRESS-MOLDED ARTICLE MANUFACTURING METHOD**

VERFAHREN ZUR HERSTELLUNG EINES PRESSFORMARTIKELS

PROCÉDÉ DE FABRICATION D'UN ARTICLE MOULÉ À LA PRESSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2018 JP 2018067929**

(43) Date of publication of application:
**17.02.2021 Bulletin 2021/07**

(73) Proprietor: **Toray Industries, Inc.**
**Tokyo 103-8666 (JP)**

(72) Inventors:
• **TAKEBE, Yoshiki**
**Iyo-gun, Ehime 791-3193 (JP)**
• **SHINOHARA, Kotaro**
**Iyo-gun, Ehime 791-3193 (JP)**
• **HONMA, Masato**
**Iyo-gun, Ehime 791-3193 (JP)**

(74) Representative: **Mewburn Ellis LLP**
**Aurora Building**
**Counterslip**
**Bristol BS1 6BX (GB)**

(56) References cited:
WO-A1-2014/103658    WO-A1-2016/084824
CN-A- 105 269 833    CN-A- 107 471 679
JP-A- H08 238 638    JP-A- 2008 254 437
JP-A- 2010 235 779    JP-A- 2013 000 933
JP-A- 2014 069 403    JP-A- 2016 163 989
US-A1- 2016 158 975    US-A1- 2016 280 871

**Description**

TECHNICAL FIELD

The present invention relates to a method for manufacturing a press-molded article containing at least a reinforcing fiber and a matrix resin.

BACKGROUND ART

In recent years, market demand for improved rigidity of industrial products such as motor vehicles, aircraft, sports products, and electronic devices has been increasing year by year. In order to meet this demand, products fabricated using sheet-shaped molding substrates formed of fiber-reinforced resins exhibiting excellent rigidity are widely utilized in various industrial applications. Among these, a press molding method for obtaining a molded article in which a standing wall portion is formed as well as a molded article having a planar shape and a technology for improving the shapeability of a sheet-shaped molding substrate by heating technique have been proposed in order to attain a reinforcing effect by the product shape (see Patent Documents 1 to 3).

For example, it is known to investigate a laminated configuration of sheet-shaped fiber-reinforced resin in order to form a standing wall shape in a press-molded article (see Patent Document 1) and to investigate the optimum melting temperature when a thermoplastic resin in a fiber-reinforced resin is melted in a method for performing press molding in order to improve shapeability (see Patent Document 2). In addition, as a deep drawing molding technology that is generally regarded to be difficult, a molding method for preventing the fiber-reinforced resin from being broken by being pushed into a molding die when shaping the shape by disposing a film on the surface of the fiber-reinforced resin has been investigated (see Patent Document 3). Patent Document 4 discloses a heat-curable resin composition comprising (1) a heat-curable resin mixture comprising a heat-curable resin and thickener particles and exhibiting a particular viscosity as defined therein, and (2) a curing agent, and is characterized in that the heat-curable resin composition exhibits particular viscosity characteristics defined therein.

PRIOR ART DOCUMENTS

PATENT DOCUMENTS

Patent Document 1: JP 5332227; Patent Document 2: JP 5459005; Patent Document 3: JP 6-344431; Patent Document 4: US 2016/0280871 A1.

SUMMARY OF THE INVENTION

PROBLEMS TO BE SOLVED BY THE INVENTION

However, in the molding method of a sheet-shaped molding substrate formed of fiber-reinforced resin, in particular, a press molding method considering the productivity, it is required to accurately obtain a molded article which does not have appearance defects. However, in a case in which the molded article has a shape such as a standing wall, it is difficult to make the pressure applied from the press molding machine to the sheet-shaped molding substrate constant because of the influence of the product shape. For this reason, it has not been investigated to apply a uniform pressing pressure to the sheet-shaped molding substrate.

In addition, in order to accurately attain the dimensions and surface appearance of a molded article obtained by press-molding a sheet-shaped molding substrate at the time of press molding, it is required to adopt a manufacturing method in which a sheet-shaped molding substrate is gradually deformed and shaped by providing auxiliary materials such as films, providing a special mechanism in the molding die, or performing the molding step plural times. For this reason, the productivity and economic efficiency are poor because of the preparation of auxiliary materials, the increase in the number of press molding steps, and the introduction of special equipment. In addition, the pressure applied to the sheet-shaped molding substrate from the press molding machine is nonuniform because of the product shape restriction, thus the molding substrate has a place where the pressure is extremely low and a place where the pressure is high, and this causes appearance defects of the molded article such as wrinkles and scrapes and decreases in mechanical properties.

The present invention has been made in view of the above problems, and an object thereof is to provide a method for manufacturing a press-molded article having excellent surface appearance by which it is possible to easily form complicated shapes such as standing walls without providing special auxiliary materials and molding equipment.

SOLUTIONS TO THE PROBLEMS

It is a press-molded article manufacturing method for press-molding a sheet-shaped molding substrate that is disposed in a cavity of a molding die and contains reinforcing fibers randomly dispersed in a matrix resin using a press molding machine provided with a molding die that is a convex molding die provided with a cavity formed between a concave mold for forming an opening of a molded article and a convex mold that matches with the concave mold, and has at least one surface (B) on which a pressure is loaded in a range of 0% to 70% of a pressure loaded on a surface (A) when the pressure loaded on the surface (A) from the press molding machine is 100% with respect to the surface (A) orthogonal to a direction of pressure applied to the molding die from the press molding machine, the press-molded article manufacturing method comprising:

a shaping step (III) of loading a surface pressure of 1 MPa or more as an external pressure from the press molding machine to the surface (A); and
a pressure holding step (IV) of setting a pressure loaded as an external pressure from the press molding machine on a molding substrate to 0.1 MPa or less without releasing the molding die after the shaping step (III).

EFFECTS OF THE INVENTION

According to the present invention, it is possible to provide a method for manufacturing a press-molded article exhibiting excellent shapeability and excellent appearance quality even in a shape to which the pressure applied from the press molding machine cannot be sufficiently loaded.

BRIEF DESCRIPTION OF THE DRAWINGS

Fig. 1 is a schematic diagram illustrating an example of positional relation between a platen of a press molding machine and a molding die.
Fig. 2 is a schematic diagram illustrating a direction and a state in which a molding die is fastened by a pressure applied by a press molding machine.
Fig. 3 is a schematic diagram illustrating an example of relation between a platen of a press molding machine and angles of a surface (a) and a surface (b) in a molding die.
Fig. 4 is a schematic diagram illustrating an example of a molded article.
Fig. 5 is a schematic diagram illustrating an example of a dispersion state of reinforcing fibers in a reinforcing fiber mat used in the present invention. Fig. 5(a) is a plan view. Fig. 5(b) is a thickness direction sectional view.

EMBODIMENTS OF THE INVENTION

Hereinafter, a press-molded article manufacturing method according to the present invention will be described. The "pressure" and "surface pressure" disclosed in the present invention will be described first.
In the present invention, the "surface (A) orthogonal to the direction of pressure applied from the press molding machine to the molding die" is a horizontal virtual surface which is orthogonal to the direction of pressure applied from the outside to one surface of the platen to which the molding die is attached. In relation to the real surface, the surface (A) is a surface parallel to one surface of the platen to which the pressure is applied. Moreover, the surface (A) often refers to the horizontal surface of the molding die when the molding die is disposed in the press molding machine.
Moreover, the "pressure loaded on the surface (A)" is equivalent to the pressure applied from the molding machine to any one surface of the platen. In addition, the press is equal to the pressure when it is assumed that the pressure is uniformly applied to the projection area as seen from the direction of the pressure applied to the molding die. Moreover, the "surface (B) on which a pressure is loaded in a range of 0% to 70% of the pressure loaded on the surface (A) when the pressure loaded on the surface (A) is 100%" is an inclined surface in the concave mold for forming the opening of the molded article and the convex mold matching with the concave portion, and the surface of which the tangent at each part of the inclined surface is about 45° to 90° with respect to the horizontal surface is referred to as the surface (B). The inclined surface includes not only a linear shape but also a curved shape and a spherical shape. This means that the pressure applied in the vertical direction from the molding machine to the platen is decomposed into a force applied in the direction perpendicular to the inclined surface and a force applied in the slope direction when the pressure is applied to the angled inclined surface and the force applied in the direction perpendicular to the inclined surface is 0% to 70%. Here, 0% is a case of being perpendicular (angle: 90°), and 70% is a case of being approximately 45°.
In the present invention, the "molding die having at least one surface" means including a standing wall at about 45° to 90° on at least one surface, for example, in a molding die for molding a three-dimensional shape, which is represented by a deep drawing mold.

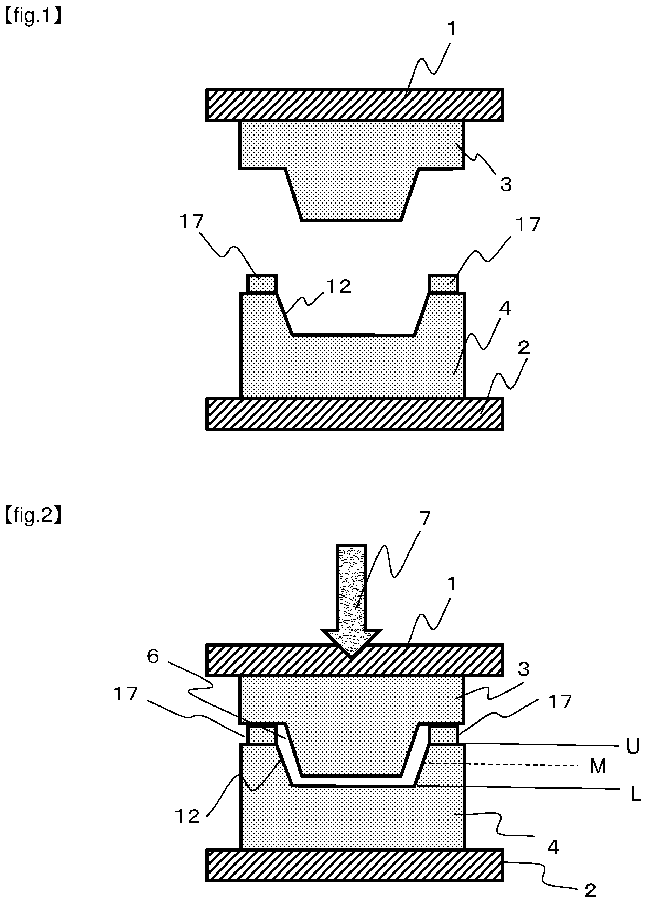

In the present invention, a molding die is used which has the surface (B) on which a pressure is loaded in a range of 0% to 70% of the pressure loaded on the surface (A) when the pressure loaded on the surface (A) is 100% based on the surface (A) which is horizontal to the surface orthogonal to the direction of pressure applied from the press molding machine. It is preferable to have the surface (A) in some cases, but it is not necessarily limited to this. The surface (A) is a surface which is horizontal to the surface orthogonal to the direction of pressure applied from the press molding machine, and is not limited to a surface which actually exists in the molding die, but is a virtual surface. In a molding die including a concave mold and a convex mold for forming the opening of a molded article, the surface (A) is a virtual surface which is horizontal to the surface orthogonal to the direction of pressure applied from the outside of the molding die from the platen attached to the molding die. On the other hand, the molding die includes at least the surface (a) and the surface (b). Fig. 2 is a diagram illustrating a molding die and a pressure imparting method. In Fig. 2, a load direction 7 of the pressure applied from the press molding machine is the direction of the pressure applied to the molding die and is the same direction as the gravity direction. A cavity 6 is a gap portion generated when the molding die is closed and is the portion matching with the shape of the molded article. In that case, if the surface (a) of the molding die is horizontal to the gravity direction, the horizontal surface (a) corresponds to the surface (A) and the molding die has the surface (A). On the other hand, if the surface (a) of the molding die is not horizontal to the gravity direction, the surface (a) does not correspond to the surface (A) and the molding die does not have the surface (A).

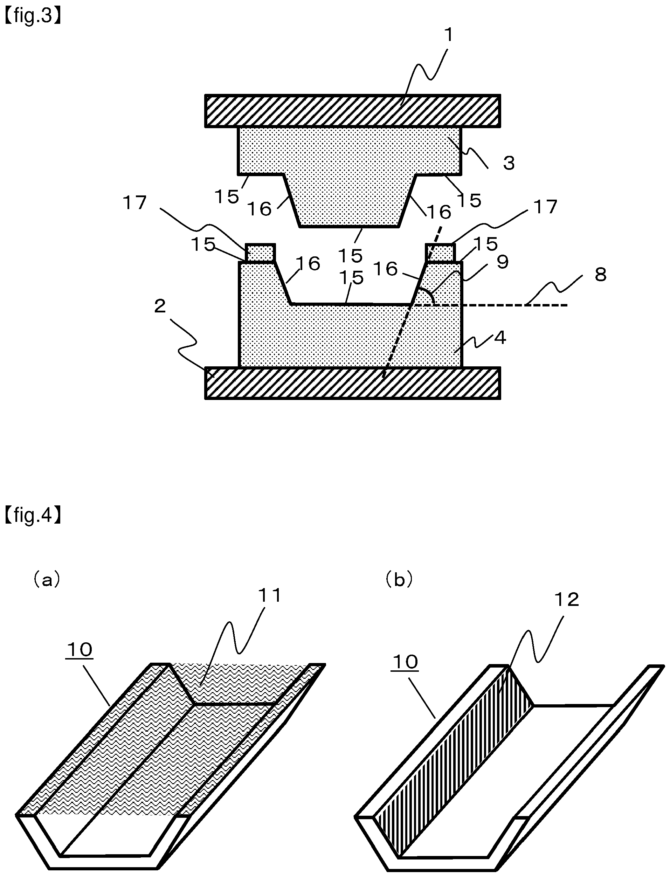

In addition, the molding substrate disposed in the cavity 6 of the molding die is shaped into the shape of the molding die to form a surface. The molded article has a surface matching with the whole or a part of the surface (A) horizontal to the surface orthogonal to the direction of pressure applied from the press molding machine in some cases (Fig. 4, reference numeral 11).

Subsequently, the surface (B) will be described. The surface (B) is a surface on which a pressure is loaded in a range of 0% to 70% of the pressure loaded on the surface (A) by the press molding machine with respect to the surface (A) (virtual surface). The molding die has a surface (b), and at least one of the surfaces (b) corresponds to the surface (B). The surface (b) is a surface on which a pressure is loaded in a range of 0% to 70% of the pressure loaded on the surface (A) by the press molding machine, and there are a plurality of surfaces (b) in some cases. In addition, the molding substrate disposed in the cavity 6 of the molding die is shaped into the shape of the molding die to be formed on the surface (B) (Fig. 4, reference numeral 12).

The "tangent at each part of the inclined surface" of the surface (B) will be described. In a case in which the inclined surface is linear (for example, the molding die illustrated in Fig. 2), the inclination of the tangent at each part of the inclined surface is the same. On the other hand, in a case in which the inclined surface is linear but the inclination changes, the inclination of the tangent at each part is different. In addition, in a case in which the inclined surface is curved, the inclination of the tangent at each part is different in some cases. The surface (B) is a surface in which the inclination of the tangent at least at the molding die center is approximately 45° to 90° with respect to the horizontal surface among the tangents at the respective parts of the inclined surface. Here, the tangent at the molding die center is a tangent at a position corresponding to a half of the height of the upper end and the lower end at which the inclination starts when the inclined surface of the molding die is projected in the cross-sectional direction. Although Fig. 2 is a cross-sectional diagram of the molding die, the tangent is a tangent at the part at the center position (M) in the height direction of the upper end (U) of the inclined surface and the lower end (L) of the inclined surface when illustrated at a molding die convex 4.

In the shaping step and the pressure holding step, the pressure applied to the molding substrate is equal to the pressure applied to the surface (a) and surface (b) of the molding die if the molding substrate is in contact with the molding die.

In the present invention, the "surface pressure Pa (MPa) loaded on the surface (a)" is the same as the pressure applied in the direction perpendicular to the surface (a), namely, the surface pressure applied to the molding substrate in contact with the surface (a) and the "surface pressure Pb (MPa) loaded on the surface (b)" is the same as the pressure applied in the direction perpendicular to the surface (b), namely, the surface pressure applied to the molding substrate in contact with the surface (b).

[Molding die]

The molding die used in the present invention will be described with reference to Fig. 1. The molding die in the present invention has a concave mold for forming an opening of a molded article and a convex matching with the concave, and a cavity is formed between the concave mold and the convex mold. As illustrated in Fig. 1, the molding die includes at least a pair of male and female molds (3, 4) of a concave and a convex which are attached to upper and lower platens (1, 2) of the press molding machine. These molding dies have a cavity according to the shape of the molded article. In addition, the cavity (6) refers to a gap portion generated when the molding die is closed and is a portion matching with the shape of the molded article as illustrated in Fig. 2.

Furthermore, it is preferable that the molding die in the present invention has at least two surfaces of a surface (a) having an inclination of 0 to 60 degrees with respect to the surface (A) (the angle of 8 in Fig. 3 is 0 degree. The concave mold is illustrated in Fig. 3) and a surface (b) having an inclination of 45 to 90 degrees with respect to the surface (A) (the angle of 9 in Fig. 3 is 60 degrees. The concave mold is illustrated in Fig. 3) since the width of product design can be widened. In this case, in a case in which the inclination of the surface (a) is 0 degree, the surface (a) is the same as the surface (A), and the surface (b) corresponds to the surface (B). It is preferable to have the surface (a) having an inclination of 0 to 60 degrees with respect to the platen of the press molding machine from the viewpoint of being easy to control the thickness of the press-molded article since the pressure applied from the press molding machine is sufficiently imparted to the sheet-shaped molding substrate in the shaping step (III) described later. For the same reason, the surface (a) is still more preferably inclined at 0 to 45 degrees, particularly preferably 0 to 15 degrees with respect to the surface (A). The surface (A) is the same as surface (a) when the surface (a) is inclined at 0 degree. Furthermore, it is preferable to have the surface (b) having an inclination of 45 to 90 degrees with respect to the surface (A) since it is possible to avoid that the pressure from the press molding machine is excessively applied to the sheet-shaped molding substrate when the sheet-shaped molding substrate is press-molded, the sheet-shaped molding substrate is prevented from excessively moving in the molding die cavity, and thus the surface appearance of the molded article can be improved. For the same reason, the surface (b) is still more preferably inclined at 60 to 90 degrees with respect to the surface (A). In the molding die used in the present invention, the continuous corner portions of the surface (a) and surface (b) have an R shape as appropriate according to the product design, and this may be adopted from the viewpoint of easy shaping of the sheet-shaped molding substrate in the shaping step (III) and easy cleaning of the molding die cavity after the molded article has been taken out.

[Press molding step]

The manufacturing method of the present invention is a method for press-molding a sheet-shaped molding substrate containing a reinforcing fiber and a matrix resin. In the manufacturing method, a molding die is used which has the surface (B) (12 in Fig. 4(b)) in which at least the surface pressure loaded on the molding substrate in the molding die cavity is in a range of 0% to 70% with respect to the pressure loaded on the surface (A) when the pressure loaded on the surface (A) (11 in Fig. 4(a)) is 100% based on the surface which is horizontal to the surface orthogonal to the direction of pressure applied from the press molding machine.

Examples of the surface (B) include a box-shaped standing wall portion, a place having a gradient in the height direction other than the apex of the quadrangular pyramid, and a place having a curvature in the height direction in a hemispherical shape. When the pressure loaded on the surface (B) is in the range of 0% to 70%, it is possible to suppress scrapes and wrinkles, which are regarded as molding defects in the molded article, and thus the appearance quality of the molded article is improved. The pressure loaded on the surface (B) is preferably in a range of 0% to 50% from the viewpoint of achieving a constant molding pressure, which is the effect of the present invention. On the other hand, it is not preferable that the pressure loaded on the surface (B) is out of the range of 0% to 70% since an excessive pressure is applied to the sheet-shaped molding substrate disposed on the surface (B) of the molded article, the molding substrate moves (shifts) in the molding die cavity during press molding, and wrinkles are generated on the surface of the molded article.

An example of the manufacturing method for press-molding a sheet-shaped molding substrate containing a reinforcing fiber and a resin according to the present invention includes

Step (I): A step of heating the molding substrate in the molding substrate to melt the thermoplastic resin

Step (II): A step of disposing the melted molding substrate in the molding die cavity

Step (III): A shaping step of loading a surface pressure of 1 MPa or more on the surface (A) from the press molding machine

Step (IV): A pressure holding step of fixing the molded shape while loading a surface pressure of 0.1 MPa or less on the molding substrate after being shaped from the press molding machine

Step (V): A step of lowering the surface temperature of the molding die cavity and then removing the molded article from the molding die

Here, the step (III) in which shaping is performed and the step (IV) in which the pressure is held to fix the shape of the molding substrate after being shaped are indispensable configurations. The shaping step (III) is a step of shaping the sheet-shaped molding substrate into the shape of the molded article, that is, molding the sheet-shaped molding substrate along the shape of the molding die cavity 6. In the present step, by imparting an external surface pressure of 1 MPa or more to the surface (A) from the press molding machine, a sufficient pressure can be applied to the sheet-shaped molding substrate, the thickness can be controlled, and the shape of the molded article can be stabilized.

Normally, the time for imparting the pressure from the press molding machine is about several seconds. The external surface pressure of 1 MPa or more from the press molding machine is confirmed by a pressure gauge attached to the molding machine. The pressure applied from the molding machine is loaded on the molding substrate via the surface (a) and surface (b) of the molding die. "With respect to the surface (A)" can be replace as "with respect to the surface (a) of the molding die" in a case in which the molding die has a horizontal surface with respect to the platen. The pressure is preferably 3 MPa or more, still more preferably 5 MPa or more. It is not preferable that the pressure is less than 1 MPa with respect to the surface (A) since a pressure is not sufficiently applied to the reinforcing fibers and resin in the molding substrate and it is difficult to control the molded article thickness. The upper limit of this surface pressure is not particularly limited but is 20 MPa from the viewpoint of preventing the reinforcing fibers in the molding substrate from being broken by the pressure and preventing decreases in mechanical properties of the press-molded article. The pressure holding step (IV) is a step of loading a surface pressure of 0.1 MPa or less on the molding substrate. Here, the pressure holding step is a step of fixing the shape of the molding substrate formed in the shaping step (III) and contributes to the dimensional stability and appearance quality of the molded article.

Hereinafter, the details of each step will be described.

Step (II): A step of disposing the melted molding substrate in the molding die cavity

In the step (II) of disposing the melted molding substrate in the molding die cavity, it is preferable that the molding substrate is disposed so as to cover 90% or more of the projection surface in the direction orthogonal to the direction of pressure applied from the press molding machine in the cavity. This is preferable from the viewpoint of suppressing the generation of defects in the molded article since the molding material can be filled up to the end of the molded article to be obtained.

Furthermore, in the step (II), it is preferable to laminate two or more layers of sheet-shaped molding substrate from the viewpoint of the thickness adjustment of the molded article and the degree of freedom of design by product design. The number of layers to be laminated is not particularly limited, but it is preferable to select the number of layers according to the thickness of the product. In addition, in a case in which the resin constituting the molding substrate is a thermoplastic resin, a heating step may be performed in order to melt the thermoplastic resin in the molding die cavity when the molding substrate is press-molded. For this reason, for the purpose of increasing the heating efficiency, it is preferable that materials having a thickness of 1 mm or less are disposed in parallel in the heating device and laminated immediately before being disposed in the molding die cavity.

In addition, in a case in which the molding substrate is laminated, prior to the disposition of the laminated molding substrate in the molding die cavity, it is preferable to adjust the surface temperature of the molding die cavity in advance to the curing temperature or solidification temperature of the resin in the sheet-shaped molding substrate or more and the decomposition temperature of the resin or less from the viewpoint of improving the surface appearance of the molded article and the production rate.

In the case of using a thermosetting resin in the sheet-shaped molding substrate, it is preferable to provide a sufficient amount of heat to melt or soften the thermosetting resin before being cured through the formation of a crosslinked structure from the viewpoint of ease of thickness control and manufacturing speed of the molded article to be press-molded. The temperature at which the resin in the molding substrate is cured can be determined by DSC (Differential Scanning Calorimetry). A temperature in a range of $\pm 20°C$ from the peak top temperature of the exothermic peak in the DSC curve attained by performing the measurement at a rate of temperature rise of 10°C/min can be defined as the curing temperature.

In a case in which the sheet-shaped molding substrate is a thermoplastic resin, it is preferable to deprive a sufficient amount of heat to solidify the sheet-shaped molding substrate which has been melted or softened by heating from the viewpoint of thickness control and manufacturing speed of the press-molded article to be manufactured. As a still more preferred aspect, it is preferable that the temperature of the molding die cavity is in a temperature range to be higher than the solidification temperature of the thermoplastic resin constituting the sheet-shaped molding substrate by 20°C to 50°C from the viewpoint of the ease of shaping of plasticized sheet-shaped molding substrate and the surface appearance of the molded article. For example, the preferred range is 200°C to 250°C in a case in which a polyamide 6 resin is used as the resin, and the preferred range is 180°C to 210°C in a case in which a polypropylene resin is used as the resin. The range may be a combination of any of the upper limits with any of the lower limits. The solidification temperature of the resin in the molding substrate can be determined by DSC (Differential Scanning Calorimetry). The point at which the melting peak rises in the DSC curve attained by performing the measurement at a rate of temperature rise of 10°C/min is defined as the solidification temperature.

In addition, it is preferable that the upper limit of the surface temperature of the molding die cavity is a temperature at which the resin components of the resin in the molding substrate do not undergo thermal decomposition from the viewpoint of obtaining a molded article exhibiting excellent surface properties.

Step (III): A shaping step of loading a surface pressure of 1 MPa or more on the surface (A) from the press molding machine

In the shaping step (III) of loading a surface pressure of 1 MPa or more from the press molding machine on the surface (A), it is preferable that the surface pressure Pa (MPa) loaded on the surface (a) and the surface pressure Pb (MPa) loaded on the surface (B, b) satisfy $0.2 \times Pa \leq Pb \leq 2 \times Pa$. Incidentally, in a case in which there are a plurality of surfaces (B, b), it is preferable that all the surfaces (B, b) satisfy the requirement of $0.2 \times Pa \leq Pb \leq 2Pa$. It is preferable since an excessive pressure from the press molding machine is not continuously applied to the molding substrate on the surface (B) and it is possible to suppress appearance defects that the molding substrate moves (shifts) in the molding die cavity during press molding and wrinkles are generated on the surface of the molded article. For the same reason, it is still more preferable that the surface pressure Pa and the surface pressure Pb are set to be in a range of $0.5 \times Pa \leq Pb \leq Pa$. The range may be a combination of any of the upper limits with any of the lower limits.

Furthermore, in the shaping step (III), it is preferable that the surface pressure loaded on the sheet-shaped molding substrate on the surface (a) in the cavity after molding die fastening is in a variation range of ±10% of the average value of the pressure loaded on the surface (a) since it is possible to suppress appearance defects that wrinkles are generated on the surface of the molded article, and the like. It is more preferable as the variation is smaller, but a practical range of the variation is preferably ±5% or less. Similarly, it is preferable that the surface pressure loaded on the sheet-shaped molding substrate on the surface (B, b) in the cavity after molding die fastening is in a variation range of ±10% of the average value of the pressure loaded on the surface (B, b) since it is possible to suppress appearance defects that wrinkles are generated on the surface of the molded article, and the like. It is more preferable as the variation is smaller, but a practical range of the variation is preferably ±5% or less. The range may be a combination of any of the upper limits with any of the lower limits.

When shaping in the press molding is performed, the sheet-shaped molding substrate is drawn into the cavity or folded and shaped and thus it is easy to form the standing wall portion and the like of the molded article and the surface appearance of the molded article obtained is improved. It is still more preferable that the sheet-shaped molding substrate covers 100% or more of the projection surface of the molding die cavity.

Furthermore, it is preferable to include a preforming step of processing the shape of the sheet-shaped molding substrate into an expanded shape of the molded article in advance prior to the shaping step (III) from the viewpoint of easy shaping of the molded article. It is preferable to process the shape into an expanded shape since it is possible to prevent the sheet-shaped molding substrate from being excessively present at the corner, for example, in the shape of a molded article represented by a box shape in the shaping step (III). In addition, in shapes of which the expanded shape is not attained such as a hemispherical shape and a rib shape having irregularities on the surface, the expanded shape is not necessarily required to be a shape in which the entire molded article to be obtained is on a flat surface and may have an overlapping portion at the end.

Step (IV): a pressure holding step of fixing the molded shape while loading a surface pressure of 0.1 MPa or less on the molding substrate after being shaped

Furthermore, the manufacturing method according to the present invention includes a step of loading a surface pressure of 0.1 MPa or less from the press molding machine on the molding substrate as the pressure holding step (IV). Here, the pressure holding step is a step of fixing the shape of the molding substrate formed in the shaping step (III) and contributes to the dimensional stability of the molded article. In addition, the pressure holding step (IV) is carried out without releasing the molding die after the shaping step (III). By this, excellent dimensional stability is exhibited. By setting the external pressure from the press molding machine to 0.1 MPa or less in this pressure holding step (IV), it is possible to suppress the dimensional change of the sheet-shaped molding substrate once shaped. This pressure is confirmed using a pressure gauge attached to the molding machine, and the like. The surface pressure of 0.1 MPa or less used herein indicates the pressure applied from the press, this pressure may be set to 0 MPa, but the pressure is continuously applied to the molding substrate shaped since the metal mold die is not released and the pressure is not released after the pressurization. It is not preferable that the external pressure from the press molding machine in the pressure holding step (IV) exceeds 0.1 MPa since the molding substrate flows or is deformed and the shape stability is poor. Generally, examples of the method for holding the pressure using a press molding machine include a method (depressurization method) in which the supply of the pressure applied from the press molding machine to the sheet-shaped molding material shaped is cut off by releasing the molding pressure and a method in which a state is attained in which a pressure is not substantially applied to the sheet-shaped molding material shaped by controlling the position of the platen of the press molding machine. However, it is preferable that the pressure holding step (IV) is performed in a state in which the molding substrate is not released from the press molding die and the platen of the press molding machine is positioned at the position at which the shaping step has been performed from the viewpoint of controlling the thickness of the molded article to a desired value. This pressure control method is referred to as a position control method.

It is preferable that the surface pressure Pa (MPa) loaded on the surface (a) and the surface pressure Pb (MPa) loaded on the surface (B, b) satisfy $0.2 \times Pa \leq Pb \leq 2 \times Pa$. Incidentally, in a case in which there are a plurality of surfaces (B, b), it is preferable that all the surfaces (B, b) satisfy the requirement of $0.2 \times Pa \leq Pb \leq 2 \times Pa$. It is preferable since an excessive pressure from the press molding machine is not continuously applied to the molding substrate on the surface (B, b) and it is possible to suppress appearance defects that the molding substrate moves (shifts) in the molding die cavity during press molding and wrinkles are generated on the surface of the molded article. For the same reason, it is still more preferable that the surface pressure Pa and the surface pressure Pb are set to be in a range of $0.5 \times Pa \leq Pb \leq Pa$. The range may be a combination of any of the upper limits with any of the lower limits.

Furthermore, the proper surface pressure requirements of the surface pressure Pa (pressure holding) and Pb (pressure holding) in the pressure holding step are in a range of 0.1 to 5 MPa. In addition, the proper surface pressure requirements are preferably in a range of 0.5% to 10% of Pa (shaping) and Pb (shaping) in the shaping step.

As the duration (pressure holding time) in the pressure holding step (IV), it is preferable that pressure holding continues until the sheet-shaped molding substrate shaped is solidified from the viewpoint of decreasing the dimensional change from the desired shape after the molded article has been taken out from the molding die. Usually, the duration is about several minutes to 10 minutes. The pressure holding time is longer as the thickness of the molded article is thicker and the surface temperature of the molding die is higher. For this reason, the pressure holding time is preferably 600 seconds or less, particularly preferably 300 seconds or less from the viewpoint of shortening the time for the pressure holding step (IV) and thus improving the economic efficiency. In some cases, a pressure holding time of 60 seconds or more is preferable. As a method for shortening the time the pressure holding step (IV), a method in which the surface temperature of the molding die is set to a temperature sufficiently lower than the solidification temperature of the resin and a method in which the temperature of the molding die is rapidly raised and rapidly lowered are preferably used.

In the present invention, a method in which a sheet-shaped molding substrate containing at least reinforcing fibers and a matrix resin is press-molded can be selected according to the desired shape of the molded article. Here, press molding is a method for obtaining a molded article by applying deformation such as bending, shearing, and compression to various materials, for example, metals, plastic materials, and ceramic materials using a processing machine, a mold, a tool and the like. Examples of molding forms include drawing, deep drawing, flanges, call gates, edge curling, and stamping. In addition, examples of the press molding method include a metal mold die press molding method in which molding is performed using a mold, a rubber press molding method (hydrostatic molding method), and extrusion molding method. Among the press-molding methods, a metal mold press molding method in which molding is performed using a metal mold can be preferably used from the viewpoint of the degree of freedom of molding pressure and temperature.

Among the press molding methods, in which a molding substrate containing at least reinforcing fibers and a thermoplastic resin, a hot pressing method is disposed in the mold in advance and pressurization and heating are performed together with mold clamping by a metal mold press molding method and then the molding material is cooled by metal mold cooling while the mold is clamped to obtain a molded body and a cold pressing method in which the molding material is heated in advance to the melting temperature of the thermoplastic resin or more using a heating device, for example, a far infrared heater, a heating plate, a high temperature oven, or dielectric heating to melt and soften the thermoplastic resin, the molding material is disposed on the mold to be the lower surface of the molding die in this state, and then the mold is closed, clamped, and then pressure cooled can be adopted. However, it is preferable to adopt the cold pressing method which provides excellent economic efficiency and workability although the press molding method of the present invention is not particularly limited.

Step (V): A step of lowering the surface temperature of the molding die cavity and then removing the molded article from the molding die

Furthermore, in the step (V), the surface temperature of the molding die cavity is lowered, but at this time, it is preferable to lower the surface temperature to the softening point or less in a case in which the resin in the sheet-shaped molding substrate is a thermoplastic resin and the glass transition point or less in a case in which the resin is a thermosetting resin since the molded article can be taken out from the molding die in the state of having stabilized dimensions.

In a case in which a thermosetting resin is used in the sheet-shaped molding substrate, it is preferable to set the temperature to the glass transition temperature or less after a sufficient amount of heat is provided to melt or soften the thermosetting resin before being cured through the formation of a crosslinked structure since it is possible to minimize the risk of dimensional change of the molded article press-molded. The glass transition temperature can be determined by DSC (Differential Scanning Calorimetry). The temperature at the intersection of the extension lines of the base line and the rising line at the endothermic portion in the DSC curve attained by the measurement in the DSC curve attained by performing the measurement at a rate of temperature rise of 10°C/min can be defined as the glass transition temperature.

[Sheet-shaped molding substrate]

In the present invention, the sheet-shaped molding substrate contains at least a resin and reinforcing fibers, and it is preferable that the resin is selected from a thermoplastic resin or a thermosetting resin from the viewpoint of improving the shapeability of the molded article, the selectivity of the surface appearance, the mechanical properties, and the lightness.

Examples of the reinforcing fibers constituting the sheet-shaped molding substrate used in the press-molded article manufacturing method of the present invention include metal fibers such as aluminum and stainless steel, PAN-based, rayon-based, lignin-based, and pitch-based carbon fibers, graphite fibers, insulating fibers such as glass, organic fibers such as aramid, PBO, and polyphenylene sulfide, and inorganic fibers such as silicon carbide and silicon nitride. In addition, these fibers may be subjected to surface treatment. As the surface treatment, there are a treatment with a coupling agent, a treatment with a sizing agent, a treatment with a binding agent, a treatment with an additive, and the like in addition to a treatment for depositing a metal as a conductor. In addition, these fibers may be used singly or two or more kinds thereof may be used concurrently. Among these, PAN-based, pitch-based, and rayon-based carbon fibers having excellent specific strength and specific rigidity are preferably used from the viewpoint of weight saving effect. In addition, glass fiber is preferably used from the viewpoint of enhancing the economic efficiency of the press-molded article obtained, and it is preferable to concurrently use carbon fiber and glass fiber particularly from the viewpoint of balance between mechanical properties and economic efficiency. Furthermore, aramid fiber is preferably used from the viewpoint of enhancing the shapeability of the press-molded article, and it is preferable to concurrently use carbon fiber and aramid fiber as long as the effect of the present invention is not impaired. In addition, it is also possible to use reinforcing fibers coated with metals such as nickel and copper from the viewpoint of enhancing the conductivity of the press-molded article. Among these, PAN-based carbon fibers exhibiting excellent mechanical properties such as strength and elastic modulus can be more preferably used.

Furthermore, the reinforcing fibers are in an approximately monofilament form and are preferably carbon fibers randomly dispersed in the sheet-shaped molding material. As the reinforcing fibers are in such an aspect, shaping into a complicated shape is facilitated in a case in which the sheet-shaped molding substrate is press-molded. In addition, it is preferable that the reinforcing fibers are in such an aspect since the voids formed by the reinforcing fibers are densified, the weak portion at the fiber bundle end of the reinforcing fibers in the sheet-shaped molding substrate can be minimized, and thus a press-molded article is obtained to which isotropy is imparted in addition to excellent reinforcing efficiency and reliability.

Here, the term "approximately monofilament form" means that the reinforcing fiber single yarn exists as a strand with a fineness of less than 500. Still more preferably, the reinforcing fibers are dispersed in the form of monofilament, namely, as a single yarn.

Here, the term "dispersed in the form of approximately monofilament or monofilament" means that the proportion (hereinafter, also referred to as fiber dispersion ratio) of single fibers of which the two-dimensional orientation angle is 1 degree or more is 80% or more among the reinforcing fibers arbitrarily selected in the sheet-shaped molding substrate. In other words, it means that the proportion of bundles in which two or more single fibers are in contact with each other and arranged in parallel is less than 20% in the sheet-shaped molding substrate. Consequently, here, it is particularly preferable that at least the mass fraction of fiber bundles having 100 or less filaments in the reinforcing fibers corresponds to 100%.

Furthermore, it is more preferable that the reinforcing fibers are randomly dispersed. Here, the fact that the reinforcing fibers are randomly dispersed means that the arithmetic mean value of two-dimensional orientation angles of the single fibers arbitrarily selected in the sheet-shaped molding substrate is in a range of 30 degrees or more and 60 degrees or less. This two-dimensional orientation angle is an angle formed by a single fiber of the reinforcing fibers and a single fiber intersecting this single fiber and is defined as an angle on the acute angle side in a range of 0 degree or more and 90 degrees or less among the angles formed by intersecting single fibers.

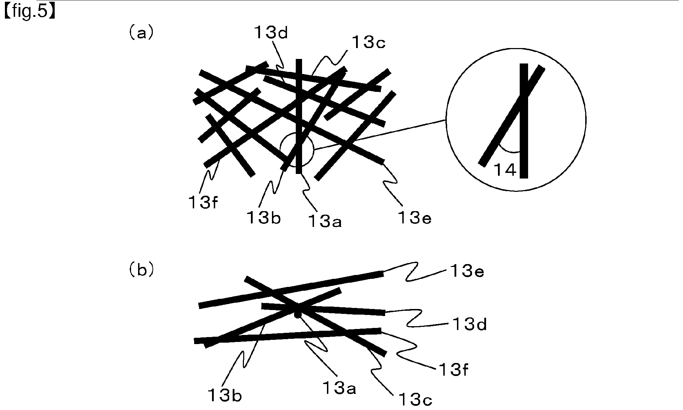

This two-dimensional orientation angle will be further described with reference to the drawings. Fig. 5(a) is a schematic diagram projected in two dimensions, and Fig. 5(b) is a schematic diagram in the cross-sectional direction. In Fig. 5(a), a single fiber 13a intersects other single fibers 13b to 13f when the single fiber 13a is regarded as the reference. Here, intersection means a state in which a single fiber to be the reference is observed by intersecting another single fiber on a two-dimensional plane observed, and the single fiber 13a and the single fibers 13b to 13f are not necessarily required to be in contact with each other. Explaining in detail with reference to the drawings, Fig. 5(b) is a cross-sectional diagram taken perpendicular to the length direction of the single fiber 13a, and the single fiber 13a extends toward the back of the paper. The single fibers 13a, 13e, and 13f are not in contact with each other. However, the single fiber 13a and the single fibers 13b to 13f intersect each other and there is a two-dimensional orientation angle when being projected two-dimensionally as illustrated in Fig. 5(a). In other words, the term "intersection" includes a state in which the single fibers are observed by intersecting each other when being projected and viewed. In other words, when the single fiber 13a to be the reference is viewed, all the single fibers 13b to 13f are the evaluation target of two-dimensional orientation angle, and the two-dimensional orientation angle in Fig. 5(a) is an angle on the acute angle side in a range of 0 degree or more and 90 degrees or less between two angles formed by two intersecting single fibers (two-dimensional orientation angle 14 is illustrated in Fig. 5).

The method for measuring the two-dimensional orientation angle is not particularly limited, but examples thereof include a method in which the orientation of reinforcing fibers is observed from the surface of the sheet-shaped molding substrate and press-molded article. The average value of two-dimensional orientation angles is measured by the following procedure. In other words, the average value of two-dimensional orientation angles of all the single fibers (single fibers 13b to 13f in Fig. 5) intersecting a randomly selected single fiber (single fiber 13a in Fig. 5) is measured. For example, in a case in which there are a large number of other single fibers which intersect a certain single fiber, 20 other intersecting single fibers may be randomly selected and the measured arithmetic mean value therefor may be substituted. This measurement is repeated 5 times in total using other single fibers as a reference, and the arithmetic mean value thereof is calculated as the arithmetic mean value of two-dimensional orientation angles.

As the reinforcing fibers are dispersed in the form of approximately monofilament and randomly, it is possible to enhance the performance imparted by the reinforcing fibers dispersed in the form of approximately monofilament described above to the maximum. In addition, isotropy can be imparted to the mechanical properties of the sheet-shaped molding substrate and press-molded article. From this view point, the fiber dispersion ratio of the reinforcing fibers is preferably 80% or more, and it is more preferable as the fiber dispersion ratio approaches 100%. In addition, the arithmetic mean value of two-dimensional orientation angles of the reinforcing fibers is preferably in a range of 40 degrees or more and 50 degrees or less, and it is more preferable as the arithmetic mean value approaches 45 degrees that is an ideal angle. As a preferred range of the two-dimensional orientation angle, any of the above-mentioned upper limits may be set as the upper limit and any of the above-mentioned lower limits may be set as the lower limit.

The proportion of the reinforcing fibers blended in the sheet-shaped molding substrate is preferably in a range of 10% to 50% by volume from the viewpoint of satisfying the reinforcing effect and lightness of the reinforcing fibers in the sheet-shaped molding substrate. It is preferable that the volume content of reinforcing fibers is 50% by volume or less since the reinforcing effect derived from the reinforcing fibers can be sufficiently attained. On the other hand, it is preferable that the volume content of reinforcing fibers is 10% by volume or more since the volume content of the reinforcing fibers with respect to the resin is relatively large, the reinforcing fibers in the sheet-shaped molding substrate are bound to each other, the reinforcing effect by the reinforcing fibers is sufficiently attained, a resin film is easily formed on the surface of the press-molded article, and thus the mechanical properties and surface appearance of the press-molded article can be satisfied. When the proportion of the reinforcing fibers blended exceeds 50% by volume, it is difficult to form the resin film although the reinforcing effect is attained. In addition, when the proportion of the reinforcing fibers blended is less than 10% by volume, it is difficult to attain the reinforcing effect.

Examples of the resin constituting the sheet-shaped molding substrate used in the press-molded article manufacturing method of the present invention include a thermoplastic resin and a thermosetting resin. Moreover, in the present invention, a thermosetting resin and a thermoplastic resin may be blended, and the component accounting for more than 50% by mass among the components constituting the resin is taken as the name of the resin in that case.

The resin in the present invention can contain at least one or more kinds of thermoplastic resins. Examples of the thermoplastic resins include crystalline resins such as "polyesters such as polyethylene terephthalate (PET), polybutylene terephthalate (PBT), polytrimethylene terephthalate (PTT), polyethylene naphthalate (PEN), and liquid crystal polyester, polyolefins such as polyethylene (PE), polypropylene (PP), and polybutylene, polyoxymethylene (POM), polyamide (PA), polyarylene sulfide such as polyphenylene sulfide (PPS), polyketone (PK), polyetherketone (PEK), polyetheretherketone (PEEK), polyetherketoneketone (PEKK), polyethernitrile (PEN), fluorine-based resin such as polytetrafluoroethylene, and liquid crystal polymer (LCP)", amorphous resins such as "polycarbonate (PC), polymethyl methacrylate (PMMA), polyvinyl chloride (PVC), polyphenylene ether (PPE), polyimide (PI), polyamide imide (PAI), polyether imide (PEI), polysulfone (PSU), polyether sulfone, and polyarylate (PAR) in addition to styrene resin", phenolic resin, phenoxy-based resin, thermoplastic elastomers of polystyrene-based, polyolefin-based, polyurethane-based, polyester-based, polyamide-based, polybutadiene-based, polyisoprene-based, fluorine-based resin, and acrylonitrile-based, and thermoplastic resins selected from copolymers and modified products of these. Among these, polyolefin is preferable from the viewpoint of lightness of the molded article obtained, polyamide is preferable from the viewpoint of strength, amorphous resins such as polycarbonate and styrene-based resin are preferable from the viewpoint of surface appearance, polyarylene sulfide is preferable from the viewpoint of heat resistance, polyetheretherketone is preferable from the viewpoint of continuous use temperature, and fluorine-based resin is preferably used from the viewpoint of chemical resistance.

The resin in the present invention can contain at least one or more kinds of thermosetting resins. Examples of the thermosetting resin include unsaturated polyester, vinyl ester, epoxy resin, phenol resin, urea resin, melamine resin, thermosetting polyimide, copolymers of these, modified products of these, and resins prepared by blending at least two kinds of these. Eepoxy resin can be preferably used from the viewpoint of mechanical properties of the molded article obtained. In addition, unsaturated polyester, vinyl ester, and epoxy resin can be preferably used from the viewpoint of surface design. Phenol resin can be preferably used from the viewpoint of flame retardancy.

In addition, the resin may contain an impact resistance improver such as an elastomer or a rubber component and other fillers and additives as long as the object of the present invention is not impaired. Examples of the fillers and additives include inorganic fillers, flame retardants, conductivity-imparting agents, crystal nucleating agents, ultraviolet absorbers, antioxidants, damping agents, anti-coloring agents, heat stabilizers, mold releasing agents, antistatic agents, plasticizers, lubricants, colorants, foaming agents, or coupling agents.

In addition, the resin may contain a binder component from various viewpoints of blocking the reinforcing fiber mat, improving the impregnating property of the reinforcing fiber mat and the resin, and improving the mechanical properties of the sheet-shaped molding substrate containing the reinforcing fiber mat and the resin. As the binder component, any of a thermoplastic resin, a thermosetting resin, a mixture thereof, or a copolymer thereof can be adopted as long as the mechanical properties of the press-molded article fabricated using the sheet-shaped molding substrate of the present invention and the respective steps in the press-molded article manufacturing method are not hindered.

Furthermore, it is preferable that the resin and binder component constituting the sheet-shaped molding substrate in the present invention are thermoplastic resins from the viewpoint of shape shapeability and ease of fabrication of sheet-shaped molding substrate. As the form of thermoplastic resin, forms of a sheet, a film, a non-woven fabric, fibers, particles, or a liquid can be appropriately selected. The form is not particularly limited as long as the mechanical properties of the press-molded article fabricated using the sheet-shaped molding substrate of the present invention and the respective steps in the press-molded article manufacturing method are not hindered, but a sheet and a film are preferably selected from the viewpoints of handleability and productivity in the impregnation step with the above-mentioned reinforcing fiber mat, and economic efficiency, forms of a non-woven fabric and fibers are preferably selected from the viewpoint of impregnating property with the reinforcing fiber mat, and forms of fibers and particles are preferably selected from the viewpoint of easily mixing the resin into the reinforcing fiber mat. The film and sheet may have any thickness as long as the content of resin in the sheet-shaped molding substrate can be satisfied. Regarding the fiber diameter of the non-woven fabric and fibers, those having a generally commercially available fiber diameter can be used, it is preferable to select and use those having a fiber diameter equal to or more than the diameter of the reinforcing fibers from the viewpoint of the stability of the step in a case in which the reinforcing fibers and the resin fibers are mixed to form a mixed mat. Moreover, in the case of particles as well, the particle diameter is not particularly limited, but it is preferable to appropriately adjust the particle diameter from the viewpoint of preventing particles from falling off during the step in a case in which a mixed mat is prepared by mixing with a reinforcing fiber mat. The thermosetting resin can be preferably used from the viewpoint of stability of mechanical properties, reliability, and shapeability. Regarding the shape of the thermosetting resin, the thermosetting resin may be applied as a liquid to the reinforcing fiber mat and impregnated or the thermosetting resin may be once formed into a film, then laminated with the reinforcing fiber mat, and impregnated.

It is preferable that the reinforcing fibers in the present invention take a non-woven fabric form from the viewpoint of ease of impregnation of the reinforcing fibers with the resin. It is preferable that the reinforcing fibers take a non-woven fabric form since the fiber can be easily impregnated even in the case of using a thermoplastic resin which is generally regarded to have a high viscosity in addition to the ease of handling of the non-woven fabric itself. Here, the non-woven fabric form refers to a form in which strands and/or monofilaments of reinforcing fibers are randomly dispersed in a planar shape, and examples thereof include forms such as chopped strand mats, continuous strand mats, papermaking mats, carding mats, airlaid mats (hereinafter these are collectively referred to as reinforcing fiber mats).

Examples of a case in which the reinforcing fibers do not take the above-described forms include a sheet substrate in which the reinforcing fibers are arranged in one direction, a woven substrate, and a non-crimp substrate. In these forms, the reinforcing fibers are regularly and densely disposed, thus the number of voids in the sheet-shaped molding substrate decreases, the impregnation of the resin is extremely difficult, and there are cases in which an unimpregnated portion is formed or the choice of impregnating means and the kind of resin are greatly limited.

As a method for manufacturing the reinforcing fiber mat, for example, there is a method in which the reinforcing fibers are dispersed in the form of strands and/or approximately monofilaments in advance and the reinforcing fiber mat is manufactured. Examples of the method for manufacturing the reinforcing fiber mat include dry processes such as an airlaid method in which reinforcing fibers are formed into a dispersion sheet in an air flow and a carding method in which the shape is adjusted and a sheet is formed while mechanically combing the reinforcing fibers and a wet process by the radlite method in which reinforcing fibers are stirred in water and papermaking is performed as known techniques. Examples of a means to bring the reinforcing fibers closer to a monofilament form include a method in which an opening bar is provided, a method in which the opening bar is further vibrated, a method in which the eyes of the card are made finer, a method in which the rotating speed of the card is adjusted in the dry process. Examples thereof include a method in which the stirring conditions of the reinforcing fibers are adjusted, a method in which the reinforcing fiber concentration in the dispersion liquid is diluted, a method in which the viscosity of the dispersion liquid is adjusted, and a method in which a vortex is suppressed when the dispersion liquid is transferred in the wet process. In particular, the reinforcing fiber mat is preferably manufactured by a wet process, and the proportion of the reinforcing fibers in the reinforcing fiber mat can be easily adjusted by increasing the concentration of input fibers or adjusting the flow velocity (flow rate) of the dispersion liquid and the speed of the mesh conveyor. For example, it is preferable to slow the speed of the mesh conveyor with respect to the flow velocity of the dispersion liquid since the orientation of the fibers in the reinforcing fiber mat obtained is hardly oriented in the take-up direction and a bulky reinforcing fiber mat can be manufactured. The reinforcing fiber mat may be composed of reinforcing fibers alone, but the reinforcing fibers may be mixed with powder-shaped and fiber-shaped matrix resin components. Moreover, the reinforcing fibers may be mixed with an organic compound and an inorganic compound.

Furthermore, the reinforcing fiber mat can be impregnated with a resin in advance. As a manufacturing method thereof, it is preferable to use a method in which the reinforcing fiber mat is impregnated by imparting a pressure to the reinforcing fiber mat in a state of being heated to a temperature equal to or more than the temperature at which the resin is melted or softened from the viewpoint of ease of manufacture. Specifically, a method in which a laminate in which a resin is disposed is melt-impregnated from both sides in the thickness direction of the reinforcing fiber mat is preferably exemplified.

A compression molding machine and a double belt press can be suitably used as the equipment for realizing the respective methods described above. The former is used in the case of batch type, and the productivity can be improved by using an intermittent press system in which two or more machines for heating and cooling are arranged in parallel. The latter is used in the case of continuous type, and the continuous productivity is excellent since continuous processing can be easily performed.

It is preferable that the sheet-shaped molding substrate has an expansion coefficient of 150% to 1000% in the thickness direction when being heated to the melting temperature or softening temperature of the resin constituting the substrate since it is easy to perform shaping and obtain the shape of the press-molded article when the heated sheet-shaped molding substrate is placed in the molding die cavity and press molding is performed. As the sheet-shaped molding substrate shaped in the molding die cavity expands in the thickness direction of the molding die cavity, it is possible to perform molding at a low press molding pressure by the pressure due to the expansion force of the sheet-shaped molding substrate even when the pressure loaded from the press molding machine is lowered. The expansion coefficient is preferably in a range of 200% to 800% in the thickness direction from the viewpoint of handleability. Moreover, the expansion coefficient is preferably in a range of 300% to 600% in the thickness direction from the viewpoint of utilizing the expansion force and improving the surface appearance of the press-molded article. The range may be a combination of any of the upper limits with any of the lower limits.

Here, the expansion coefficient (t3) is an index indicating the degree of expansion of the sheet-shaped molding substrate in the softened state and is expressed by the following equation using the thickness (t1) of the sheet-shaped molding substrate at a temperature of 23°C and the thickness (t2) of the sheet-shaped molding substrate at a temperature higher than the melting point of the thermoplastic resin by 40°C in a case in which the resin contained in the sheet-shaped molding substrate is a thermoplastic resin or the thickness (t2) of the sheet-shaped molding substrate at a temperature at which the thermosetting resin reaches the minimum viscosity in a case in which the resin contained in the sheet-shaped molding substrate is a thermosetting resin.

- 

$$t3 = t2/t1 \times 100 (\%)$$

Incidentally, in the measurement of the thicknesses t1 and t2 of the molding substrate, the size of the measurement sample is, for example, 100 mm in length and 100 mm in width. By setting the measurement points of t1 and t2 to be the same place in the measurement sample, the expansion coefficient can be accurately measured. Furthermore, in a case in which the measurement points are five or more and the measurement places are, for example, five, the position moved by 40 mm in the vertical and horizontal directions from the center and central portion of the measurement sample is taken as the measurement point, for example.

Moreover, it is preferable that the reinforcing fibers in the sheet-shaped molding substrate have a mass average fiber length of 1 to 15 mm from the viewpoint of increasing the reinforcing efficiency of the press-molded article by the reinforcing fibers and realizing the expansion coefficient described above. As the mass average fiber length of the reinforcing fibers is 1 mm or more, the probability that the reinforcing fibers in the sheet-shaped molding substrate exists in the thickness direction increases and a sheet-shaped molding substrate having smaller thickness variation at the time of expansion can be obtained. Furthermore, the quality of the reinforcing fiber mat can be improved and thus the surface appearance of the press-molded article is improved. On the other hand, it is preferable that the mass average fiber length of the reinforcing fibers is 15 mm or less since the reinforcing fibers are hardly bent in the sheet-shaped molding substrate by the own weight and the exertion of mechanical properties is not hindered. When the mass average fiber length is less than 1 mm, agglomeration is likely to occur and the dispersibility decreases. When the mass average fiber length exceeds 15 mm, the reinforcing fibers are likely to be bent by the own weight and the mechanical properties decrease. The mass average fiber length of the reinforcing fibers can be calculated as the mass average fiber length of 400 remaining reinforcing fibers by removing the resin components of the sheet-shaped molding substrate by a method such as burning out or elution, randomly selecting 400 fibers from the remaining reinforcing fibers, and measuring the length thereof to 10 um unit.

Examples of the press-molded article obtained by the press-molded article manufacturing method of the present invention include electric and electronic device parts such as "casing for home appliances such as personal computers, displays, and OA equipment, trays, chassis, interior members, or cases thereof", structural parts for motor vehicles and motorcycles such as "various members, various frames, various hinges, various arms, various axles, various wheel bearings, and various beams", "external plates or body parts such as hood, roof, door, fender, trunk lid, side panel, rear end panel, front body, underbody, various pillars, various members, various frames, various beams, various supports, various rails, and various hinges", "exterior parts such as bumpers, bumper beams, moldings, undercovers, engine covers, baffles, spoilers, cowl louvers, and aero parts", and "interior parts such as instrument panel, seat frame, door trim, pillar trim, handle, and various modules", parts for motor vehicles and motorcycles such as "battery tray, headlamp support, pedal housing, protector, lamp reflector, lamp housing, noise shield, and spare tire cover", and aircraft parts such as "landing gear pod, winglet, spoiler, edge, rudder, elevator, failing, rib, and seat". From the viewpoint of mechanical properties, the press-molded article is preferably used in interiors and exteriors of motor vehicles, electric and electronic device housings, bicycles, structural materials for sports goods, aircraft interior materials, and transportation boxes. Among these, the press-molded article is particularly suitable for a manufacturing method of the application for a module member composed of a plurality of parts.

EXAMPLES

Hereinafter, the present invention will be specifically described with reference to Examples. Incidentally, the present invention is not limited to the following Examples.

[Evaluation and measurement methods]

(1) Volume content of reinforcing fiber in sheet-shaped molding substrate and press-molded article

A test piece was cut out from a sheet-shaped molding substrate in a length of 10 mm and a width of 10 mm, the mass Ws and the volume Vs of the porous body (a) were measured, then the test piece was heated in air at 500°C for 30 minutes to burn off the resin components, the mass Wf of the remaining reinforcing fibers was measured, and the volume content was calculated by the following equation.

$$\text{Vf of reinforcement fiber (\% by volume) =}$$

$$(Wf/\rho f)/\{Wf/\rho f + (Ws - Wf)/\rho r\} \times Vs \times 100$$

$\rho f$: Density of reinforcing fiber (g/cm$^3$)
$\rho r$: Density of resin (g/cm$^3$)
Vs: Apparent volume of porous body (a) (cm$^3$)

(2) Dispersion state of reinforcing fiber in molding substrate

Those satisfying the following (2-1) and (2-2) were judged that the dispersion state of fibers is random.

(2-1) Fiber dispersion state in sheet-shaped molding substrate and press-molded article

The reinforcing fiber mat was taken out from the sheet-shaped molding substrate by the same method as in (1) above. The surface of the reinforcing fiber mat obtained was observed under an electron microscope (VHX-500 manufactured by KEYENCE CORPORATION), one single fiber was randomly selected, and the two-dimensional orientation angle with another single fiber in contact with the single fiber was measured. The magnification is set to 50-fold. As the two-dimensional orientation angle, an angle (acute angle side) of 0° or more and 90° or less was adopted between two angles formed by the two single fibers in contact with each other. The measurement of two-dimensional orientation angle was carried out for all the single fibers which were in contact with the selected single fiber, and this was carried out for 100 single fibers selected. From the results attained, the ratio of the number of single fibers of which the two-dimensional orientation angle was 1 degree or more to the total number of single fibers of which the two-dimensional orientation angle was measured was determined as the fiber dispersion ratio, and those having a fiber dispersion ratio of 90% or more were adopted as the first requirement for judging to be random. In addition, those in which the reinforcing fibers were observed in the form of a bundle in the observation were judged to be in a bundle form and judged to be in a not excellent dispersion state.

(2-2) Two-dimensional orientation angle in sheet-shaped molding substrate and press-molded article

The reinforcing fiber mat was taken out from the sheet-shaped molding substrate by the same method as in (1) above. The reinforcing fiber mat obtained was observed under an electron microscope (VHX-500 manufactured by KEYENCE CORPORATION), one single fiber was randomly selected, and the two-dimensional orientation angle with another single fiber intersecting the single fiber was measured by image observation. As the orientation angle, an angle (acute angle side) of 0° or more and 90° or less was adopted between two angles formed by the two single fibers intersecting each other. The number of two-dimensional orientation angles measured per one single fiber selected was set to n = 20. The same measurement was performed by selecting a total of five single fibers, the average value thereof was defined as the two-dimensional orientation angle, and those having a two-dimensional orientation angle of 40 degrees to 50 degrees was adopted as the second requirement for judging to be random.

(3) Expansion coefficient in thickness direction of molding substrate

The expansion coefficient after heating was measured by the following procedures (A) to (C). Incidentally, all the thicknesses were measured using a caliper (Digital Caliper CD-67S20PS (trade name) manufactured by Mitutoyo Corporation).
(A) The thickness (t1) of the sheet-shaped molding substrate at room temperature (23°C) is measured.
(B) The melted and softened molding substrate is taken out from the heating device (a temperature higher than the melting point of the thermoplastic resin by 40°C in a case in which the resin is a thermoplastic resin and a temperature at which the thermosetting resin reaches the minimum viscosity at the time of heating and thermosetting in a case in which the resin is a thermosetting resin), cooled in the air, and then the thickness of the molding substrate is measured (t2). Incidentally, the size of the measurement sample was set to 100 mm in length and 100 mm in width. The measurement points of t1 and t2 were the same places in the measurement sample. Furthermore, the measurement points were set to five, and a position moved by 40 mm in the vertical and horizontal directions from the center and the central portion of the measurement sample was taken as the measurement point.
(C) The expansion coefficient (t3) of the molding substrate after heating is calculated by the following equation. t3 is determined by the measurement at five points, and the average value thereof is determined.

$$\mathrm{t3[\%]\ =\ (t2[mm]/t1[mm])\ \times\ 100}$$

(4) Measurement of pressure applied to surface (a) and surface (b) of molding die in shaping step and pressure holding step

The measurement was performed using pressure sensors disposed on the surface (a) and the surface (b) having an angle of the press molding die. The pressure sensor was installed at the positions to be equally divided on the surface (a) of the molded article (n = 5). On the standing wall portion (corresponding to the surface (b)), the pressure sensor was disposed at one place in the longitudinal direction. There are a plurality of surfaces (b), and one pressure sensor is attached to each of these to measure the pressure on the plurality of surfaces (b). The arithmetic mean value of the numerical values measured by this pressure sensor was taken as the surface pressure of each of the surface (a) and the surface (b). Furthermore, the variation of the pressure applied to each surface was determined by calculating the variation coefficient (CV value (%)) which was an index of variation by calculating the standard deviation from each measured value and dividing the standard deviation by the average value. Incidentally, the variation was calculated separately for the surface (a) and the surface (b). In a case in which both the surface (a) and the surface (b) satisfied the requirement of surface (B), one having a large inclination from the surface (A) and a lower surface pressure is presented in the table as the value of surface (b). Incidentally, in the shaping step and the pressure holding step, the pressure applied to the molding substrate is equal to the pressure applied to the surface (a) and surface (b) matching with each other of the molding die if the molding substrate is in contact with the molding die.

(5) Pressure loaded on projection surface of molded article from press molding machine

By defining the output of the press molding machine that read from the pressure monitor installed in the press molding machine as Fp and dividing the output by the projection area Sm of the molded article, the pressure ($\sigma\rho$) loaded on the projection surface of the molded article was calculated by the following equation.

$$\sigma p[MPa] = Fp[kN]/Sm[mm^2] \times 1000$$

(6) Appearance evaluation of molded article

For molded articles obtained by press molding, the molding defects represented by scrapes and wrinkles at each of the flat surface portion (the surface (A) portion) and the standing wall portion (the surface (B) portion) was visually observed. As the evaluation index, a molded article without scrapes or wrinkles was evaluated to be "good" indicating pass and a molded article with scrapes or wrinkles was evaluated to be "poor" indicating failure.

<Molding dies used>

[Molding die M-1]

As the molding die M-1, a box-shaped metal mold composed of upper and lower molds was used. The top surface and the bottom surface each had four sides (the same applies to M-2 to M-4 below).
The size of the molded article projection surface by the upper mold (convex) is 196 mm in length, 196 mm in width, and 22 mm in height.
The size of the molded article projection surface by the lower mold (concave) is 200 mm in length, 200 mm in width, and 20 mm in height.
The angle between the surface (a) and the platen is 0 degree
The angle between the surface (b) and the platen is 90 degrees
Incidentally, the pressure sensor was installed at one point at the center of the lower mold and at 100 mm positions (four places) from the center point of the upper mold toward the four corners for a total of five places on the surface (a) and at one place (four places in total) at the center of each side on the surface (b).

[Molding die M-2]

As the molding die M-2, a box-shaped metal mold composed of upper and lower molds was used.
The size of the convex of the upper mold, the size of the concave of the lower mold, the angle between the surface (a) and the platen, and the position of the pressure sensor are the same as those in M-1.

Angle between surface (b) and platen: 45 degrees [Molding die M-3]

As the molding die M-3, a box-shaped metal mold composed of upper and lower molds was used.
The size of the convex to be the upper mold, the size of the concave to be the lower mold, and the position of the pressure sensor are the same as those in M-1.

Angle between surface (a) and platen: 45 degree
Angle between surface (b) and platen: 60 degrees [Molding die M-4]
As the molding die M-4, a box-shaped metal mold composed of upper and lower molds was used.

The size of the convex to be the upper mold, the size of the concave to be the lower mold, and the position of the pressure sensor are the same as those in M-1.

Angle between surface (a) and platen: 15 degree
Angle between surface (b) and platen: 70 degrees

<Materials used>

[Carbon fiber]

Spinning, burning process, and surface oxidation treatment were performed to obtain a continuous carbon fiber having a total number of single yarns of 12,000 from a copolymer containing polyacrylonitrile as a main component. The properties of this continuous carbon fiber were as follows.

Specific gravity: 1.8
Tensile strength: 4600 MPa
Tensile modulus: 220 GPa
Tensile elongation at break: 2.1%

[PP resin]

A resin sheet was fabricated which contained an unmodified polypropylene resin ("Prime Polypro" (registered trademark) J105G manufactured by Prime Polymer Co., Ltd.) at 80% by mass and an acid-modified polypropylene resin ("ADMER" (registered trademark) QB510 manufactured by Mitsui Chemicals, Inc.) at 20% by mass and had a weight per unit area of 200 $g/m^2$.

[PPS resin]

A resin sheet was fabricated which contained a polyphenylene sulfide resin ("TORELINA" (registered trademark) A900 manufactured by TORAY INDUSTRIES, INC.) and had a weight per unit area of 268 $g/m^2$.

[Molding substrate S-1]

A carbon fiber used as the reinforcing fiber was cut into 5 mm with a cartridge cutter to obtain chopped carbon fibers. A dispersion liquid was prepared which contained water and a surfactant (polyoxyethylene lauryl ether (trade name) manufactured by NACALAI TESQUE, INC.) and had a concentration of 0.1% by mass, and a reinforcing fiber mat was manufactured using this dispersion liquid and the chopped carbon fibers. The manufacturing apparatus is equipped with a cylindrical container having a diameter of 1000 mm and an opening cock at the lower portion of the container as a dispersion tank and a linear transportation section (inclination angle: 30 degrees) that connects the dispersion tank and the papermaking tank to each other. A stirrer is attached to the opening on the upper surface of the dispersion tank, and the chopped carbon fibers and the dispersion liquid (dispersion medium) can be introduced through the opening. The papermaking tank is equipped with a mesh conveyor having a papermaking surface with a width of 500 mm at the bottom, and a conveyor capable of conveying a mat composed of carbon fibers is connected to the mesh conveyor. Papermaking was performed by setting the concentration of carbon fibers in the dispersion liquid to 0.05% by mass. The carbon fiber mat formed was dried in a drying oven at 200°C for 30 minutes to obtain a reinforcing fiber mat. The weight per unit area of the mat obtained was 90 $g/m^2$.
Subsequently, a laminate was fabricated in which the reinforcing fiber mat and the PP resin were disposed in the order of [PP resin/reinforcing fiber mat/reinforcing fiber mat/PP resin]. Furthermore, S-1 was obtained by performing the following steps (i) to (iv). The properties are presented in Table 1.

(i) The laminate was disposed in a molding die cavity for press molding preheated to 200°C, and the molding die of which the upper mold and the lower mold both had a flat plate shape was closed.
(ii) Subsequently, the state was held for 120 seconds, a pressure of 3 MPa was imparted, and the state was further held for 60 seconds.
(iii) Subsequently, the cavity temperature was cooled to 50°C in a state in which the pressure was held.
(iv) The molding die was opened and the molding substrate was taken out.

[Molding substrate S-2]

A carbon fiber used as the reinforcing fiber was cut into 8 mm with a cartridge cutter to obtain chopped carbon fibers. A reinforcing fiber mat was fabricated by the method described in the molding substrate S-1. The weight per unit area of the mat obtained was 90 $g/m^2$.
Subsequently, a laminate was fabricated in which the reinforcing fiber mat and the PP resin were disposed in the order of [PP resin/reinforcing fiber mat/reinforcing fiber mat/reinforcing fiber mat/reinforcing fiber mat/PP resin].

Furthermore, S-2 was obtained by sequentially performing the steps (i) to (iv) described in the molding substrate S-1. The properties are presented in Table 1.

[Molding substrate S-3]

A reinforcing fiber mat was obtained by the method described in the molding substrate S-1 except that a carbon fiber used as the reinforcing fiber was cut into 15 mm with a cartridge cutter. The weight per unit area of the mat obtained was 90 g/m$^2$.

Subsequently, S-3 was fabricated by sequentially performing the steps (i) to (iv) described in the molding substrate S-1.

[Molding substrate S-4]

A reinforcing fiber mat was obtained by the method described in the molding substrate S-1 except that a carbon fiber used as the reinforcing fiber was cut into 8 mm with a cartridge cutter. The weight per unit area of the mat obtained was 90 g/m$^2$.

Subsequently, a laminate was fabricated in which the reinforcing fiber mat and the PPS resin were disposed in the order of [PPS resin/reinforcing fiber mat/reinforcing fiber mat/reinforcing fiber mat/reinforcing fiber mat/reinforcing fiber mat/PPS resin]. Furthermore, S-4 was obtained by performing the following steps (i) to (iv). The properties are presented in Table 1.

(i) The laminate was disposed in a molding die cavity for press molding preheated to 320°C, and the molding die was closed.

The steps (ii) to (iv) are the same as those in S-1.

[Molding substrate S-5]

A carbon fiber used as the reinforcing fiber was cut into 5 mm with a cartridge cutter to obtain chopped carbon fibers. The chopped carbon fibers were placed in a cotton opener to obtain a cotton-like carbon fiber assembly in a state in which a large number of carbon fiber bundles having the initial thickness were present. This reinforcing fiber assembly was placed in a carding device (the number of rotations of cylinder roll was 100 rpm, the speed of doffer was 13 m/min) having a cylinder roll with a diameter of 600 mm to form a reinforcing fiber mat composed of carbon fibers. A large number of carbon fibers in a bundle form were observed in this reinforcing fiber mat. The weight per unit area of the mat obtained was 90 g/m$^2$.

S-5 was obtained by the same fabrication method as in S-1 except the above. The properties are presented in Table 1.

[Molding substrate S-6]

A reinforcing fiber mat was obtained by the method described in the molding substrate S-1. The weight per unit area of the mat obtained was 90 g/m$^2$.

Subsequently, a laminate was fabricated in which the reinforcing fiber mat and the PP resin were disposed in the order of [PP resin/PP resin/reinforcing fiber mat/PP resin/PP resin]. Furthermore, S-6 was obtained by sequentially performing the steps (i) to (iv) described in the molding substrate S-1. The properties are presented in Table 1.

(Example 1)

A molded article was molded by using S-1 as the molding material and M-1 as the molding die and sequentially performing the following steps (I) to (V). A hydraulic press molding machine was used for press molding, and a far infrared heater was used for melting the molding substrate. Incidentally, the size of the molding substrate was adjusted so as to be 150% of the projection surface of the cavity of the molding die. The properties of the molded article thus molded are presented in Table 2.

Step (I): The molding substrate was heated to 200°C to melt the thermoplastic resin.

Step (II): The temperature of the molding die cavity was adjusted to 100°C in advance, and four layers of the melted molding substrates were stacked and immediately disposed in the molding die cavity.

Step (III): The molding die was fastened, the pressure applied from the press molding machine was applied to the surface (A) orthogonal to the direction of pressure applied from the press molding machine so as to be 3 MPa, and shaping was performed.

Step (IV): The applied pressure was released, the thickness was fixed by position control, and the pressure was held. At this time, the surface pressure Pa on the surface (a) displayed on the pressure sensor was 3 MPa and the surface pressure Pb on the surface (b) was 2.5 MPa.

Step (V): After the step (IV) was held for 1 minute, the molding die was released, and the molded article was released from the mold.

The molded article obtained was shaped in a shape conforming to the molding die cavity, and wrinkles or scrapes were not observed at any part, and the surface state was good.

(Example 2)

A press-molded article was obtained by the same steps as in Example 1 except that S-2 was used as the molding material, M-2 was used as the molding die, the size of the molding substrate was adjusted so as to be 130% of the projection surface of the cavity of the molding die, and a pressure was applied from the press molding machine to the projection surface of the molding substrate so as to be 15 MPa and shaping was performed in the step (III).

Incidentally, the surface pressure Pa on the surface (a) displayed on the pressure sensor was 3 MPa and the surface pressure Pb on the surface (b) was 3 MPa in the step (IV).

The molded article obtained was shaped in a shape conforming to the molding die cavity, and wrinkles or scrapes were not observed at any part, and the surface state was good. The properties of the molded article thus molded are presented in Table 2.

(Example 3)

A molded article was molded by using S-3 as the molding material and M-3 as the molding die and sequentially performing the following steps (I) to (V). The same apparatus as in Example 1 was used for press molding. Incidentally, the size of the molding substrate was adjusted so as to be 110% of the projection surface of the cavity of the molding die. The properties of the molded article thus molded are presented in Table 2. The steps (I) and (III) to (V) were performed in the same manner as in Example 1. In the step (II), the temperature of the molding die cavity was adjusted to 120°C in advance, and two layers of the melted molding substrates were stacked and immediately disposed in the molding die cavity.

Incidentally, the surface pressure Pa on the surface (a) displayed on the pressure sensor was 3 MPa and the surface pressure Pb on the surface (b) was 2.5 MPa.

The molded article obtained was shaped in a shape conforming to the molding die cavity, and wrinkles or scrapes were not observed at any part, and the surface state was good.

(Example 4)

A molded article was molded by using S-4 as the molding material and M-4 as the molding die and sequentially performing the following steps (I) to (V). The same apparatus as in Example 1 was used for press molding. Incidentally, the size of the molding substrate was adjusted so as to be 150% of the projection surface of the cavity of the molding die. The properties of the molded article thus molded are presented in Table 2. The steps (I), (IV), and (V) were performed in the same manner as in Example 1.

The step (II) was performed in the same manner as in Example 1 except that the temperature of the molding die cavity was adjusted to 80°C. The step (III) was performed in the same manner as in Example 1 except that the pressure was applied from the press molding machine to the projection surface of the molding substrate so as to be 10 MPa and shaping was performed.

Incidentally, the surface pressure Pa on the surface (a) displayed on the pressure sensor was 3 MPa and the surface pressure Pb on the surface (b) was 2.5 MPa in the step (IV).

The molded article obtained was shaped in a shape conforming to the molding die cavity, and wrinkles or scrapes were not observed at any part, and the surface state was good.

(Comparative Example 1)

A molded article was molded by using S-5 as the molding material and M-1 as the molding die and sequentially performing the following steps (I) to (V). The same apparatus as in Example 1 was used for press molding. Incidentally, the size of the molding substrate was adjusted so as to be 100% of the projection surface of the cavity of the molding die. The properties of the molded article thus molded are presented in Table 2. The steps (I), (III), and (V) were performed in the same manner as in Example 4.

The step (II) was performed in the same manner as in Example 4 except that the temperature of the molding die cavity was adjusted to 100°C.

The surface pressure Pa on the surface (a) displayed on the pressure sensor was 0 MPa and the surface pressure Pb on the surface (b) was 0 MPa in the step (IV).

The molded article obtained was not shaped in a shape conforming to the molding die cavity, and wrinkles or scrapes were generated on the standing wall portion, and appearance defects were observed.

(Comparative Example 2)

A press-molded article was obtained by the same method as in Comparative Example 1 except that S-6 was used as the molding material, M-4 was used as the molding die, the size of the molding substrate was adjusted so as to be 80% of the projection surface of the cavity of the molding die, and a pressure was applied from the press molding machine to the projection surface of the molding substrate so as to be 15 MPa and shaping was performed in the step (III). The properties of the molded article thus molded are presented in Table 2.

Incidentally, the surface pressure Pa on the surface (a) displayed on the pressure sensor was 0 MPa and the surface pressure Pb on the surface (b) was 0 MPa in the step (IV).

The molded article obtained was not shaped in a shape conforming to the molding die cavity, and wrinkles or scrapes were generated on the standing wall portion, and appearance defects were observed.

(Comparative Example 3)

A press-molded article was obtained by the same method as in Example 2 except that S-2 was used as the molding material, M-2 was used as the molding die, the size of the molding substrate was adjusted so as to be 130% of the projection surface of the cavity of the molding die, a pressure was applied from the press molding machine to the projection surface of the molding substrate so as to be 15 MPa and shaping was performed in the step (III), and the step (IV) was not performed. The properties of the molded article thus molded are presented in Table 3.

The molded article obtained was not shaped in a shape conforming to the molding die cavity, and wrinkles or scrapes were generated on the standing wall portion, and appearance defects were observed.

[Table 1]

| Molding material | | Unit | S-1 | S-2 | S-3 | S-4 | S-5 | S-6 |
|---|---|---|---|---|---|---|---|---|
| | Reinforcing fiber | Kind | Carbon fiber | Carbon fiber | Carbon fiber | Carbon fiber | Carbon fiber | Carbon fiber |
| | Fiber length | mm | 5 | 8 | 15 | 8 | 5 | 5 |
| | Thermoplastic resin | Kind | PP resin | PP resin | PP resin | PPS resin | PP resin | PP resin |
| | Fiber opening | State | Monofilament form | Monofilament form | Monofilament form | Monofilament form | Bundle form | Monofilament form |
| | Fiber dispersion | State | Random | Random | Random | Random | Random | Random |
| | Volume content of reinforcing fiber | Volume% | 20 | 33 | 20 | 38.5 | 20 | 5.9 |
| | Volume content of resin | Volume% | 80 | 67 | 80 | 61.5 | 80 | 94.1 |

**EP 3 778 173 B1**

[Table 2]

| | | | | Unit | Example 1 | Example 2 | Example 3 | Example 4 |
|---|---|---|---|---|---|---|---|---|
| Molding material | | | | | S-1 | S-2 | S-3 | S-4 |
| Molding die | Name | | | | M-1 | M-2 | M-3 | M-1 |
| | Shape | Standing wall angle | | Degrees | 90 | 45 | 60 | 90 |
| | Angle with platen | Surface (a) | | Degrees | 0 | 0 | 45 | 0 |
| | | Surface (b) | | Degrees | 90 | 45 | 60 | 90 |
| | Projection area part | Surface pressure from press to surface (A) | | MPa | 3 | 15 | 3 | 10 |
| | Surface pressure change part | Surface pressure from press to surface (B) | | MPa | 0 | 10.5 | 1.5 | 0 |
| | Surface pressure change part | Proportion of surface (B) to surface (A) | | % | 0 | 70 | 50 | 0 |
| Molding step | (I) Heating step | Substrate heating step | | With or without | With | With | With | With |
| | | Expansion ratio | | Times | 600 | 750 | 500 | 650 |
| | | Additional lamination step | | Number of layers | 4 | 4 | 2 | 4 |
| | (II) Material disposing step | Metal mold temperature | | °C | 100 | 100 | 120 | 80 |
| | | Material disposition (proportion of cavity to projection surface) | | % | 150 | 130 | 110 | 150 |
| | | Material shape (expanded shape) | | With or without | With | With | Without | With |
| | (III) Shaping step | Surface pressure from press to surface (A) | | MPa | 3 | 15 | 3 | 10 |
| | | Surface pressure (a) Pa | | MPa | 3 | 15 | 2.1 | 10 |
| | | Variation in surface pressure (a) Pa | | % | 3 | 5 | 7 | 5 |
| | | Surface pressure (b) Pb | | MPa | 0 | 10.6 | 2.5 | 0 |
| | | Variation in surface pressure (b) Pb | | % | 7 | 7 | 5 | 10 |
| | | $0.2 \times Pa \leq Pb \leq 2 \times Pa$ | | Numerical value | x | ○ | ○ | ○ |

(continued)

| | | | Unit | Example 1 | Example 2 | Example 3 | Example 4 |
|---|---|---|---|---|---|---|---|
| | (IV) Pressure holding step | Surface pressure (a) Pa | MPa | 3 | 3 | 3 | 3 |
| | | Variation in surface pressure (a) Pa | % | 5 | 5 | 3 | 7 |
| | | Surface pressure (b) Pb | MPa | 2.5 | 3 | 2.5 | 2.5 |
| | | Variation in surface pressure (b) Pb | % | 7 | 7 | 5 | 10 |
| | | $0.2 \times Pa \leq Pb \leq 2 \times Pa$ | Numerical value | ○ | ○ | ○ | ○ |
| | | Pressure from press molding machine | MPa | 0 | 0.1 | 0 | 0 |
| | | Pressure control method | | Position | Position | Position | Position |
| | (V) Demolding step | Mold cooling | With or without | Without | Without | With | Without |
| | | Mold temperature | °C | 100 | 100 | 50 | 80 |
| Molded article | | Appearance quality (wrinkles) | State | Favorable | Favorable | Favorable | Favorable |
| | | Appearance quality (scrapes) | State | Favorable | Favorable | Favorable | Favorable |
| | | Two-dimensional orientation angle | State | Random | Random | Random | Random |

[Table 3]

| | Unit | Comparative Example 1 | Comparative Example 2 | Comparative Example 3 |
|---|---|---|---|---|
| Molding material | | S-5 | S-6 | S-2 |

(continued)

| | | | Unit | Comparative Example 1 | Comparative Example 2 | Comparative Example 3 |
|---|---|---|---|---|---|---|
| Metal molding die | Name | | | M-1 | M-4 | M-2 |
| | Shape | Standing wall angle | Degrees | 90 | 70 | 45 |
| | Angle with platen | Surface (a) | Degrees | 0 | 15 | 0 |
| | | Surface (b) | Degrees | 90 | 70 | 45 |
| | Projection area part | Surface pressure from press to surface (A) | MPa | 10 | 15 | 15 |
| | Surface pressure change part | Surface pressure from press to surface (B) | MPa | 0 | 11.5 | 10.5 |
| | Surface pressure change part | Proportion of surface (B) to surface (A) | % | 0 | 77 | 70 |
| Molding step | (I) Heating step | Substrate heating step | With or without | With | With | With |
| | | Expansion ratio | Times | 600 | 130 | 750 |
| | | Additional lamination step | Number of layers | 9 | 4 | 9 |
| | (II) Material disposing step | Metal mold temperature | °C | 100 | 100 | 100 |
| | | Material disposition (proportion of cavity to projection surface) | % | 100 | 80 | 130 |
| | | Material shape (expanded shape) | With or without | With | Without | With |

(continued)

| | | | Unit | Comparative Example 1 | Comparative Example 2 | Comparative Example 3 |
|---|---|---|---|---|---|---|
| | (III) Shaping step | Surface pressure from press to surface (A) | MPa | 10 | 15 | 15 |
| | | Surface pressure (a) Pa | MPa | 10 | 14.5 | 15 |
| | | Variation in surface pressure (a) Pa | % | 15 | 7 | Not measurable |
| | | Surface pressure (b) Pb | MPa | 0 | 7.5 | 10.5 |
| | | Variation in surface pressure (b) Pb | % | 12 | 4 | 7 |
| | | 0.2×Pa≤Pb≤2×Pa | Numerical value | × | ○ | ○ |
| | (IV) Pressure holding step | Surface pressure (a) Pa | MPa | 0 | 0 | Without pressure holding step |
| | | Variation in surface pressure (a) Pa | % | Not calculable | Not calculable | - |
| | | Surface pressure (b) Pb | MPa | 0 | 0 | - |
| | | Variation in surface pressure (b) Pb | % | Not calculable | Not calculable | - |
| | | 0.2×Pa≤Pb≤2×Pa | Numerical value | x | x | - |
| | | Pressure from press molding machine | MPa | 5 | 5 | - |
| | | Pressure control method | | Depressurization | Depressurization | - |
| | (V) Demolding step | Mold cooling | With or without | Without | Without | Without |
| | | Mold temperature | °C | 100 | 100 | 100 |

(continued)

| | | Unit | Comparative Example 1 | Comparative Example 2 | Comparative Example 3 |
|---|---|---|---|---|---|
| Molded article | Appearance quality (wrinkles) | State | Poor | Poor | Poor |
| | Appearance quality (scrapes) | State | Poor | Poor | Poor |
| | Two-dimensional orientation angle | State | Non-random | Non-random | Non-random |

[Discussion]

In Examples 1 to 4 above, it was possible to obtain a beautiful molded article which had a standing wall but did not have appearance defects such as wrinkles although there was a place which did not receive the pressure from the press molding apparatus in the molded article. According to the present method, it is possible to obtain a press-molded article extremely economically without requiring great cost since this method does not require excessive pressure and introduction of a large-scaled press molding apparatus. This is because there is no difference between the two-dimensional orientation angle on each surface of the press-molded article obtained and the two-dimensional orientation angle of the sheet-shaped molding substrate before being press-molded and changes in the surface state are small.

On the other hand, in Comparative Example 1, scrapes were generated on the standing wall portion. It is considered that this is because the pressure applied in the shaping step is too low, the reinforcing fibers in the molding material are present in a bundle form, thus the pressure generated from the molding material in the molding die was low, and, as a result, the shape cannot be ensured. In Comparative Example 2, the surface (B) of the molding die had a gentle inclination, the amount of reinforcing fibers in the molding material was small, and a flow phenomenon due to pressurization occurred, and thus wrinkles were generated on the standing wall portion of the molded article. In both Comparative Examples 1 and 2, press-molded articles having excellent surface appearance were not obtained.

INDUSTRIAL APPLICABILITY

According to the present invention, provided is a method for manufacturing a molded article exhibiting excellent shape conformability and excellent appearance quality even in a shape in which the pressure applied from the press molding machine is not sufficiently loaded due to the shape of the molded article.

DESCRIPTION OF REFERENCE SIGNS

1: Platen (top) of press molding machine
2: Platen (bottom) of press molding machine
3: Molding die convex
4: Molding die concave
6: Cavity after molding die fastening
7: Load direction of pressure applied from press molding machine
8: Angle between horizontal surface of platen and surface (a) of molding die
9: Angle between horizontal surface of platen and surface (b) of molding die
10: Press-molded article
11: Reference surface (A) of press-molded article
12: Surface (B) receiving surface pressure in range of 0% to 70% of that of reference surface (A)
13a to 13f: Single fiber
14: Two-dimensional orientation angle
15: Surface (a)
16: Surface (b)

17: Spacer for thickness control

**Claims**

1. A press-molded article manufacturing method for press-molding a sheet-shaped molding substrate that is disposed in a cavity (6) of a molding die and contains reinforcing fibers randomly dispersed in a matrix resin using a press molding machine provided with a molding die that is a convex molding die (3) provided with a cavity (6) formed between a concave mold (4) for forming an opening of a molded article and a convex mold (3) that matches with the concave mold (4), and has at least one second surface (12) on which a pressure is loaded in a range of 0% to 70% of a pressure loaded on a first surface (11) when the pressure loaded on the first surface (11) from the press molding machine is 100% with respect to the first surface (11) orthogonal to a direction of pressure applied to the molding die from the press molding machine,
   the press-molded article manufacturing method comprising:

   a shaping step (III) of loading a surface pressure of 1 MPa or more as an external pressure from the press molding machine to the first surface (11); and
   a pressure holding step (IV) of setting a pressure loaded as an external pressure from the press molding machine on the molding substrate to 0.1 MPa or less without releasing the molding die after the shaping step (III).

2. The press-molded article manufacturing method according to claim 1, wherein the pressure loaded on the molding substrate as the external pressure from the press molding machine is set to 1 MPa or more in the shaping step (III).

3. The press-molded article manufacturing method according to claim 1 or 2, wherein

   the molding die has a third surface (15) having an inclination of 0 to 60 degrees with respect to the first surface (11), and a fourth surface (16) having an inclination of 45 to 90 degrees with respect to the first surface (11) and a greater inclination than the inclination of the third surface (15), and
   at least one fourth surface (16) corresponds to the second surface (12).

4. The press-molded article manufacturing method according to any one of claims 1 to 3, wherein a surface pressure Pa (MPa) loaded on the first surface (15) and a surface pressure Pb (MPa) loaded on the fourth surface (16) satisfy $0.2 \times Pa \le Pb \le 2 \times Pa$ in the shaping step (III), wherein the surface pressure Pa (MPa) loaded on the third surface (15) and the surface pressure Pb (MPa) loaded on the fourth surface (16) satisfy $0.2 \times Pa \le Pb \le 2 \times Pa$ in the pressure holding step (IV),
   wherein a surface pressure loaded on the sheet-shaped molding substrate on the third surface (15) in the cavity (6) after molding die fastening is in a variation range of $\pm10\%$ of an average value of the pressure loaded on the third surface (15), and the surface pressure loaded on the sheet-shaped molding substrate on the fourth surface (16) in the cavity (6) after molding die fastening is in a variation range of $\pm10\%$ of an average value of the pressure loaded on the fourth surface (16) in the shaping step (III).

5. The press-molded article manufacturing method according to any one of claims 1 to 4, comprising a step (II) of disposing the sheet-shaped molding substrate in a molding die cavity (6) prior to the shaping step (III), wherein two or more layers of the sheet-shaped molding substrate are laminated in the step (II).

6. The press-molded article manufacturing method according to any one of claims 1 to 5, wherein the pressure holding step (IV) is performed by position control of the press molding machine.

7. The press-molded article manufacturing method according to any one of claims 1 to 6, wherein the step (II) is a step of disposing a melted molding material in a molding cavity (6), and
   the sheet-shaped molding substrate is disposed so as to cover 90% or more of a projection surface in a direction orthogonal to a direction of pressure applied from the press molding machine in the molding die cavity (6).

8. The press-molded article manufacturing method according to any one of claims 1 to 7, wherein the reinforcing fibers are in an approximately monofilament form.

9. The press-molded article manufacturing method according to any one of claims 1 to 8, wherein the reinforcing fibers are carbon fibers.

10. The press-molded article manufacturing method according to any one of claims 1 to 9, wherein the matrix resin is selected from a thermoplastic resin or a thermosetting resin.

11. The press-molded article manufacturing method according to any one of claims 1 to 10, wherein a proportion of reinforcing fibers blended in the molding substrate is in a range of 10% to 50% by volume.

12. The press-molded article manufacturing method according to any one of claims 1 to 11, wherein the sheet-shaped molding substrate has an expansion coefficient of 150% to 1000% in a thickness direction when being heated to a melting temperature or softening temperature of the matrix resin.

13. The press-molded article manufacturing method according to any one of claims 1 to 12, comprising a preforming step of processing the sheet-shaped molding substrate into an expanded shape of a molded article in advance prior to the shaping step (III).

14. The press-molded article manufacturing method according to any one of claims 5 to 13, wherein a surface temperature of the molding die cavity (6) is adjusted in advance to a curing temperature or solidification temperature of a resin in the molding substrate or more and a decomposition temperature of the resin or less in the step (II).

15. The press-molded article manufacturing method according to any one of claims 1 to 14, comprising a step (V) of lowering a surface temperature of the molding die cavity (6) and then taking out a molded article from the molding die after the pressure holding step (IV), wherein
in the step (V), a surface temperature of the molding die cavity (6) is lowered to a softening point or less when the resin in the sheet-shaped molding substrate is a thermoplastic resin and to a glass transition point or less when the resin is a thermosetting resin.

**Patentansprüche**

1. Pressformteil-Herstellungsverfahren zum Pressformen eines plattenförmigen Formsubstrats, das in einem Hohlraum (6) eines Formwerkzeugs angeordnet ist und Verstärkungsfasern enthält, die in einem Matrixharz zufällig verteilt sind, unter Verwendung einer Pressformmaschine, die mit einem Formwerkzeug bereitgestellt ist, das ein konvexes Formwerkzeug (3) ist, das mit einem Hohlraum (6) bereitgestellt ist, der zwischen einer konkaven Form (4) zum Formen einer Öffnung eines Formteils und einer konvexen Form (3), die zu der konkaven Form (4) passt, ausgebildet ist, und zumindest eine zweite Fläche (12) aufweist, auf der ein Druck im Bereich von 0 % bis 70 % eines auf eine erste Fläche (11) beaufschlagten Drucks beaufschlagt wird, wenn der von der Pressformmaschine auf die erste Fläche (11) beaufschlagte Druck in Bezug auf die erste Fläche (11) orthogonal zu einer Richtung von Druck, der von der Pressformmaschine auf das Formwerkzeug beaufschlagt wird, 100 % ist,
wobei das Pressformteil-Herstellungsverfahren Folgendes umfasst:

einen Formgebungsschritt (III) des Beaufschlagens eines Flächendrucks von 1 MPa oder mehr als Außendruck von der Pressformmaschine auf die erste Fläche (11);
einen Druckhalteschritt (IV) des Einstellens eines Drucks, der als Außendruck von der Pressformmaschine auf das Formsubstrat beaufschlagt wird, auf 0,1 MPa oder weniger, ohne das Formwerkzeug nach dem Formgebungsschritt (III) freizugeben.

2. Pressformteil-Herstellungsverfahren nach Anspruch 1, wobei der als Außendruck von der Pressformmaschine auf das Formsubstrat beaufschlagte Druck im Formgebungsschritt (III) auf 1 MPa oder mehr eingestellt ist.

3. Pressformteil-Herstellungsverfahren nach Anspruch 1 oder 2, wobei

das Formwerkzeug eine dritte Fläche (15) mit einer Neigung von 0 bis 60 Grad in Bezug auf die erste Fläche (11) und eine vierte Fläche (16) mit einer Neigung von 45 bis 90 Grad in Bezug auf die erste Fläche (11) und einer größeren Neigung als die Neigung der dritten Fläche (15) aufweist, und
wobei zumindest eine vierte Fläche (16) der zweiten Fläche (12) entspricht.

4. Pressformteil-Herstellungsverfahren nach einem der Ansprüche 1 bis 3, wobei ein Flächendruck Pa (MPa), der auf die erste Fläche (15) beaufschlagt wird, und ein Flächendruck Pb (MPa), der auf die vierte Fläche (16) beaufschlagt wird, im Formgebungsschritt (III) $0,2 \times Pa \leq Pb \leq 2 \times Pa$ befriedigen, wobei der Flächendruck Pa (MPa), der auf die dritte Fläche (15) beaufschlagt wird, und der Flächendruck Pb (MPa), der auf die vierte Fläche (16) beaufschlagt wird, im Druckhalteschritt (IV) $0,2 \times Pa \leq Pb \leq 2 \times Pa$ befriedigen,

wobei im Formgebungsschritt (III) ein Flächendruck, der auf das plattenförmige Formsubstrat auf die dritte Fläche (15) im Hohlraum (6) beaufschlagt wird, nach dem Formwerkzeug-Befestigen in einem Schwankungsbereich von $\pm$ 10 % eines Durchschnittswerts des Drucks, der auf die dritte Fläche (15) beaufschlagt wird, liegt und der Flächendruck, der auf das plattenförmige Formsubstrat auf der vierten Fläche (16) im Hohlraum (6) beaufschlagt wird, nach dem Formwerkzeug-Befestigen in einem Schwankungsbereich von $\pm$ 10 % eines Durchschnittswerts des Drucks, der auf die vierte Fläche (16) beaufschlagt wird, liegt.

5. Pressformteil-Herstellungsverfahren nach einem der Ansprüche 1 bis 4, umfassend einen Schritt (II) des Anordnens des plattenförmigen Formsubstrats in einem Formwerkzeughohlkörper (6) vor dem Formgebungsschritt (III), wobei zwei oder mehrere Schichten des plattenförmigen Formsubstrats in Schritt (II) laminiert werden.

6. Pressformteil-Herstellungsverfahren nach einem der Ansprüche 1 bis 5, wobei der Druckhalteschritt (IV) durch Positionssteuern der Pressformmaschine erfolgt.

7. Pressformteil-Herstellungsverfahren nach einem der Ansprüche 1 bis 6, wobei Schritt (II) ein Schritt des Anordnens eines geschmolzenen Formmaterials in einem Formhohlraum (6) ist und

wobei das plattenförmige Formsubstrat so angeordnet ist, dass es 90 % oder mehr einer Projektionsfläche in einer Richtung orthogonal zu einer Richtung von Druck, der von der Pressformmaschine im Formwerkzeughohlraum (6) beaufschlagt wird, bedeckt.

8. Pressformteil-Herstellungsverfahren nach einem der Ansprüche 1 bis 7, wobei die Verstärkungsfasern annähernd eine Monofilamentform aufweisen.

9. Pressformteil-Herstellungsverfahren nach einem der Ansprüche 1 bis 8, wobei die Verstärkungsfasern Kohlenstofffasern sind.

10. Pressformteil-Herstellungsverfahren nach einem der Ansprüche 1 bis 9, wobei das Matrixharz aus einem thermoplastischen Harz oder einem thermisch-härtbaren Harz ausgewählt ist.

11. Pressformteil-Herstellungsverfahren nach einem der Ansprüche 1 bis 10, wobei ein Anteil an Verstärkungsfasern, die dem Formsubstrat beigemischt sind, in einem Bereich von 10 bis 50 Vol.-% liegt.

12. Pressformteil-Herstellungsverfahren nach einem der Ansprüche 1 bis 11, wobei das plattenförmige Formsubstrat einen Ausdehnungskoeffizienten von 150 % bis 1000 % in Dickenrichtung aufweist, wenn es auf eine Schmelztemperatur oder Erweichungstemperatur des Matrixharzes erhitzt wird.

13. Pressformteil-Herstellungsverfahren nach einem der Ansprüche 1 bis 12, umfassend das Durchführen eines Vorformschritts des Verarbeitens des plattenförmigen Formsubstrats zu einer ausgedehnten Form eines Formteils vor dem Formgebungsschritt (III).

14. Pressformteil-Herstellungsverfahren nach einem der Ansprüche 5 bis 13, wobei die Oberflächentemperatur des Formwerkzeughohlkörpers (6) vorab an eine Härtungstemperatur oder Verfestigungstemperatur eines Harzes im Formsubstrat oder mehr und eine Zersetzungstemperatur des Harzes oder weniger in Schritt (II) angepasst wird.

15. Pressformteil-Herstellungsverfahren nach einem der Ansprüche 1 bis 14, umfassend einen Schritt (V) des Senkens der Oberflächentemperatur des Formwerkzeughohlraums (6) und anschließenden Herausnehmens eines Formteils aus dem Formwerkzeug nach dem Druckhalteschritt (IV), wobei

in Schritt (V) die Oberflächentemperatur des Formwerkzeughohlraums (6) auf einen Erweichungspunkt oder weniger gesenkt wird, wenn das Harz im plattenförmigen Formsubstrat ein thermoplastisches Harz ist, und auf einen Glasübergangspunkt oder weniger gesenkt wird, wenn das Harz ein thermisch-härtbares Harz ist.

**Revendications**

1. Procédé de fabrication d'un article moulé à la presse pour mouler à la presse un substrat de moulage en forme de feuille qui est disposé dans une cavité (6) d'une matrice de moulage et contient des fibres de renforcement dispersées de manière aléatoire dans une résine de matrice, en utilisant une machine de moulage à la presse pourvue d'une matrice de moulage qui est une matrice de moulage convexe (3) pourvue d'une cavité (6) formée entre un moule concave (4) pour former une ouverture d'un article moulé et un moule convexe (3) qui correspond au moule concave (4), et présente au moins une deuxième surface (12) sur laquelle une pression est appliquée dans une plage de 0 % à 70 % d'une pression chargée sur une première surface (11) lorsque la pression chargée sur la première surface (11) à partir de la machine de moulage à la presse est de 100 % par rapport à la première surface (11) orthogonale à une direction de pression appliquée à la matrice de moulage à partir de la machine de moulage à la presse, le procédé de fabrication d'un article moulé à la presse comprenant :

> une étape de mise en forme (III) consistant à charger une pression de surface de 1 MPa ou plus en tant que pression externe de la machine de moulage à la presse sur la première surface (11) ; et
> une étape de maintien de pression (IV) consistant à régler une pression chargée en tant que pression externe provenant de la machine de moulage à la presse sur le substrat de moulage à 0,1 MPa ou moins sans libérer la matrice de moulage après l'étape de mise en forme (III).

**2.** Procédé de fabrication d'un article moulé à la presse selon la revendication 1, dans lequel la pression chargée sur le substrat de moulage en tant que pression externe provenant de la machine de moulage à la presse est réglée à 1 MPa ou plus dans l'étape de mise en forme (III).

**3.** Procédé de fabrication d'un article moulé à la presse selon la revendication 1 ou 2, dans lequel

> la matrice de moulage présente une troisième surface (15) présentant une inclinaison de 0 à 60 degrés par rapport à la première surface (11), et une quatrième surface (16) présentant une inclinaison de 45 à 90 degrés par rapport à la première surface (11) et une inclinaison supérieure à l'inclinaison de la troisième surface (15), et au moins une quatrième surface (16) correspond à la deuxième surface (12).

**4.** Procédé de fabrication d'un article moulé à la presse selon l'une quelconque des revendications 1 à 3, dans lequel une pression de surface Pa (MPa) chargée sur la première surface (15) et une pression de surface Pb (MPa) chargée sur la quatrième surface (16) satisfont $0,2 \times Pa \leq Pb \leq 2 \times Pa$ dans l'étape de mise en forme (III), dans lequel la pression de surface Pa (MPa) chargée sur la troisième surface (15) et la pression de surface Pb (MPa) chargée sur la quatrième surface (16) satisfont $0,2 \times Pa \leq Pb \leq 2 \times Pa$ dans l'étape de maintien de pression (IV), dans lequel une pression de surface chargée sur le substrat de moulage en forme de feuille sur la troisième surface (15) dans la cavité (6) après la fixation de la matrice de moulage est dans une plage de variation de $\pm$ 10 % d'une valeur moyenne de la pression chargée sur la troisième surface (15), et la pression de surface chargée sur le substrat de moulage en forme de feuille sur la quatrième surface (16) dans la cavité (6) après la fixation de la matrice de moulage est dans une plage de variation de $\pm$ 10 % d'une valeur moyenne de la pression chargée sur la quatrième surface (16) dans l'étape de mise en forme (III).

**5.** Procédé de fabrication d'un article moulé à la presse selon l'une quelconque des revendications 1 à 4, comprenant une étape (II) consistant à disposer le substrat de moulage en forme de feuille dans une cavité de matrice de moulage (6) avant l'étape de mise en forme (III), dans lequel deux couches ou plus du substrat de moulage en forme de feuille sont stratifiées à l'étape (II).

**6.** Procédé de fabrication d'un article moulé à la presse selon l'une quelconque des revendications 1 à 5, dans lequel l'étape de maintien de pression (IV) est effectuée par commande de position de la machine de moulage à la presse.

**7.** Procédé de fabrication d'un article moulé à la presse selon l'une quelconque des revendications 1 à 6, dans lequel l'étape (II) est une étape consistant à disposer un matériau de moulage fondu dans une cavité de moulage (6), et le substrat de moulage en forme de feuille est disposé de manière à couvrir 90 % ou plus d'une surface de projection dans une direction orthogonale à une direction de pression appliquée à partir de la machine de moulage à la presse dans la cavité de matrice de moulage (6).

**8.** Procédé de fabrication d'un article moulé à la presse selon l'une quelconque des revendications 1 à 7, dans lequel les fibres de renforcement se présentent sous une forme approximativement monofilamentaire.

**9.** Procédé de fabrication d'un article moulé à la presse selon l'une quelconque des revendications 1 à 8, dans lequel les fibres de renforcement sont des fibres de carbone.

**10.** Procédé de fabrication d'un article moulé à la presse selon l'une quelconque des revendications 1 à 9, dans lequel la résine de matrice est choisie parmi une résine thermoplastique ou une résine thermodurcissable.

**11.** Procédé de fabrication d'un article moulé à la presse selon l'une quelconque des revendications 1 à 10, dans lequel une proportion de fibres de renforcement mélangées dans le substrat de moulage est dans une plage de 10 % à 50 % en volume.

**12.** Procédé de fabrication d'un article moulé à la presse selon l'une quelconque des revendications 1 à 11, dans lequel le substrat de moulage en forme de feuille présente un coefficient de dilatation de 150 % à 1 000 % dans le sens de l'épaisseur lorsqu'il est chauffé à une température de fusion ou à une température de ramollissement de la résine de matrice.

**13.** Procédé de fabrication d'un article moulé à la presse selon l'une quelconque des revendications 1 à 12, comprenant une étape de préformage consistant à traiter le substrat de moulage en forme de feuille en une forme expansée d'un article moulé à l'avance avant l'étape de mise en forme (III).

**14.** Procédé de fabrication d'un article moulé à la presse selon l'une quelconque des revendications 5 à 13, dans lequel une température de surface de la cavité de matrice de moulage (6) est ajustée à l'avance à une température de durcissement ou à une température de solidification d'une résine dans le substrat de moulage ou plus et à une température de décomposition de la résine ou moins dans l'étape (II).

**15.** Procédé de fabrication d'un article moulé à la presse selon l'une quelconque des revendications 1 à 14, comprenant une étape (V) consistant à abaisser une température de surface de la cavité de matrice de moulage (6), puis à retirer un article moulé à partir de la matrice de moulage après l'étape de maintien de pression (IV), dans lequel dans l'étape (V), une température de surface de la cavité de matrice de moulage (6) est abaissée à un point de ramollissement ou moins lorsque la résine dans le substrat de moulage en forme de feuille est une résine thermoplastique et à un point de transition vitreuse ou moins lorsque la résine est une résine thermodurcissable.

【fig.1】

【fig.2】

【fig.3】

【fig.4】

(a)

(b)

【fig.5】

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5332227 B
- JP 5459005 B
- JP 6344431 A
- US 20160280871 A1